# EUROPÄISCHE PATENTANMELDUNG

(11) **EP 4 328 519 A1**
(43) Veröffentlichungstag der Anmeldung: **28.02.2024**
(21) Anmeldenummer: 22192239.6
(22) Anmeldetag: 25.08.2022
(51) Int. Cl.: F24T 50/00, F28F 19/00

(54) **VERFAHREN UND VORRICHTUNG ZUR GEWINNUNG VON ERDWÄRME SOWIE VERFAHREN ZUR ERZEUGUNG ELEKTRISCHER ENERGIE**

(71) Anmelder: ERK Eckrohrkessel GmbH, 12489 Berlin (DE); Hammann GmbH, 76855 Annweiler am Trifels (DE); Geox Innovation, 76829 Landau (DE)
(72) Erfinder: KLEIN, Norbert, 57520 Grosbliederstroff (FR); HELLWIG, Udo, 12351 Berlin (DE); TZOULAKIS, Nikolaos, 77704 Oberkirch (DE)
(74) Vertreter: Schulz Junghans Patentanwälte PartGmbB

(57) **Zusammenfassung**

Die Erfindung betrifft ein Verfahren zur Gewinnung von Erdwärme, bei dem ein zumindest teilweise flüssiges, warmes Medium (1) aus der Erde gefördert wird, in einen Wärmeübertrager (3) geleitet wird, und in dem Wärmeübertrager (3) Wärmethermische Energie aus dem warmen Medium (1) auf ein Wärmeübertragermedium (2) übertragen wird, und das erwärmte Wärmeübertragermedium (2) zur Verfügung gestellt wird, wobei der Wärmeübertrager (3) dazu eingerichtet ist, entlang zumindest einer Strömungsrichtung von dem warmen Medium (1) sowie von dem Wärmeübertragermedium (2) durchflossen zu werden, und wobei bei der Durchströmung des Wärmeübertragers (3) zwischen einer Durchströmung in Gleichstrom und einer Durchströmung in Gegenstrom von warmem Medium (1) und Wärmeübertragermedium (2) gewechselt wird.

Weiterhin betrifft die Erfindung eine Vorrichtung zur Gewinnung von Erdwärme.

## Beschreibung

Die Erfindung betrifft ein Verfahren sowie eine Vorrichtung zur Gewinnung von Erdwärme. Weiterhin betrifft die Erfindung ein Verfahren zur Erzeugung elektrischer Energie.

Die sich zuspitzende Klimakrise sorgt aktuell für eine starke Trendumkehr der nachgefragten Energieträger weg von fossilen Energieträgern wie Kohle oder Öl hin zu erneuerbaren Energien und Energieträgern, die keinen bzw. nur einen möglichst geringen Treibhauseffekt, insbesondere durch Ausstoß von CO2, verursachen. Damit einher geht ein aktuell stark ansteigender Strompreis. Erdwärme stellt durch ihr natürliches Vorkommen sowie die Möglichkeit, diese weitgehend verbrennungsfrei, d.h. ohne bzw. nur mit sehr geringem Ausstoß von Treibhausgasen, zu nutzen, einen vielversprechenden Energieträger dar. So kann beispielsweise warmer Schlamm aus der Erde gefördert und mittels Wärmeübertragern thermische Energie aus dem Erdreich auf ein Wärmeübertragermedium übertragen werden. Die hierbei gewonnene thermische Energie kann im Anschluss zumindest teilweise in elektrische Energie umgewandelt werden. Allerdings bilden sich in den Rohren von Wärmeübertragern durch die Förderung von Wärmemedien insbesondere bei höheren oder niederen Temperaturen - je nach Zusammensetzung des in den Regionen vorhandenen Tiefenwassers - Ablagerungen an den Rohrwänden, was man auch als Fouling bezeichnet. Diese aus Abfallstoffen der verwendeten Wärmemedien bestehenden Ablagerungen wachsen bei Betrieb des Wärmeübertragers kontinuierlich und sorgen somit für Korrosionsschäden an den Rohren sowie eine verschlechterte Wärmeübertragung. Aus Gründen der Wirtschaftlichkeit müssen daher derartige Wärmeübertrager bei zu starken Ablagerungen zur Wartung teilweise abgeschaltet und chemisch, mechanisch und/oder mit Spülungen gereinigt werden. Dies sorgt für zusätzliche Kosten im Betrieb.

Der vorliegenden Erfindung liegt hiervon ausgehend die Aufgabe zugrunde, ein Verfahren sowie eine Vorrichtung zur Gewinnung von Erdwärme bereitzustellen, mit denen in effizienter Weise die Zurverfügungstellung von Erdwärme realisiert werden kann.

Diese Aufgabe wird durch ein Verfahren mit den Merkmalen des Anspruchs 1, eine Vorrichtung mit den Merkmalen des Anspruchs 9 sowie ein Verfahren mit den Merkmalen des Anspruchs 8 gelöst.

Vorteilhafte Ausführungsformen des Verfahrens bzw. der Vorrichtung sind in den Unteransprüchen 2 bis 7 bzw. 10 bis 15 angegeben.

Ein erster Aspekt der vorliegenden Erfindung betrifft ein Verfahren zur Gewinnung von Erdwärme. Bei diesem Verfahren wird ein zumindest teilweise flüssiges, warmes Medium aus der Erde gefördert, in einen Wärmeübertrager geleitet, und in dem Wärmeübertrager thermische Energie aus dem warmen Medium auf ein Wärmeübertragermedium übertragen. Weiterhin wird das erwärmte Wärmeübertragermedium zur Verfügung gestellt, wobei der Wärmeübertrager dazu eingerichtet ist, entlang zumindest einer Strömungsrichtung von dem warmen Medium sowie von dem Wärmeübertragermedium durchflossen zu werden, und wobei bei der Durchströmung des Wärmeübertragers zwischen einer Durchströmung in Gleichstrom und einer Durchströmung in Gegenstrom von warmem Medium und Wärmeübertragermedium gewechselt wird.

Das warme Medium kann beispielsweise eine Flüssigkeit, insbesondere eine Suspension enthalten.

In einem Ausführungsbeispiel kann das warme Medium aus der Erde bzw. dem Erdreich geförderter, warmer Schlamm sein. Dieser erfindungsgemäß aus der Erde geförderte warme Schlamm enthält Erdwärme, sodass thermische Energie aus der Erde mittels des Wärmeübertragers von dem warmen Schlamm auf das Wärmeübertragermedium übertragen werden kann. Die Temperatur dieses warmen Schlamms steigt dabei mit zunehmender Fördertiefe des warmen Schlamms aus dem Erdreich: 100 m zusätzliche Fördertiefe bedeuten einen Temperaturanstieg des warmen Schlamms um ca. 3° C.

In einem weiteren, zweiten Aspekt der Erfindung, kann dann mittels eines zweiten Verfahrens die hier gewonnene thermische Energie zumindest teilweise in elektrische Energie umgewandelt werden.

Für eine ideale Wärmeübertragung vom warmen Medium auf das Wärmeübertragermedium durchfließen das warme Medium und das Wärmeübertragermedium den Wärmeübertrager bevorzugterweise in Gegenstrom, denn hier ist die mittlere Temperaturdifferenz des warmen Mediums und des Wärmeübertragermediums größer als bei Gleichstrom, sodass je Zeit- und Wärmeübertragungsflächeneinheit ein Maximum an Wärme übertragbar ist. Mit der Zeit kommt es jedoch zum einleitend beschriebenen Problem des Foulings, nämlich der Bildung von aus Abfallprodukten des warmen Mediums bestehenden Ablagerungen, welche die Wärmeübertragung hemmen. Im erwähnten Ausführungsbeispiel können beispielsweise im warmen Schlamm enthaltene Salze unterhalb einer Kristallisationstemperatur kristallisieren und so durch Salzbeläge die Wärmeübertragung verringern. Diese Kristallisationstemperatur kann bei aus der Erde gefördertem Schlamm bei ungefähr 80° C liegen.

Durch das erfindungsgemäße Wechseln der Durchströmung des Wärmeübertragers zwischen einer Durchströmung in Gleichstrom und einer Durchströmung in Gegenstrom von warmem Medium und Wärmeübertragermedium wird eine Temperatur des warmen Mediums bei jedem Wechsel abrupt verändert. Dieser Thermoschock sorgt für ein Ablösen von Ablagerungen. Insbesondere kann beim Wechsel von Gegenstrom auf Gleichstrom die Temperatur im warmen Medium erhöht werden, was einer Kristallisation und Bildung von Ablagerungen entgegenwirkt, so sich gebildete Ablagerungen ablösen und vom Volumenstrom des warmen Mediums mitgenommen werden können.

Durch das Ablösen von Ablagerungen wird somit vorteilhaft ein kontinuierlicher Betrieb des Wärmeübertragers ermöglicht, sodass kontinuierlich thermische Energie aus dem Erdreich gewonnen werden kann.

Im erwähnten Ausführungsbeispiel führt ein Wechseln zwischen Gleichstrom und Gegenstrom zum Aufbrechen und Wegspülen der Salzbeläge.

Um den Vorgang mit gewünschter Effizienz zu betreiben kann nach einer Zeit des Betriebs im Gleichstrom wieder auf das Gegenstromprinzip umgeschaltet werden, in dem eine im Vergleich zum Gleichstromprinzip höhere Wärmeübertragung stattfindet.

Die Temperaturen von warmem Medium und Wärmeübertragermedium sowie die erreichte Wärmeübertragung vom warmen Medium auf das Wärmeübertragermedium können indikative Parameter für einen Grad der Ablagerungen sein, sodass der Wechsel zwischen Gegenstrom und Gleichstrom anhand zumindest eines dieser Parameter vorgenommen werden kann.

Das warme Medium kann zum Beispiel mittels Pumpen aus dem Erdreich gefördert werden. Durch die Erfindung wird weiterhin vorteilhaft ermöglicht, dass das warme Medium durch die verhinderte bzw. verringerten Ablagerungen in Bewegung bleibt, sodass dieses nicht erstarrt und auch wieder in das Erdreich zurückgeführt werden kann. Somit entsteht einerseits kein Entsorgungsproblem für das aus dem Erdreich geförderte warme Medium und es können andererseits bergrechtliche Grundsätze der Förderung eingehalten werden.

Zusätzlich zum erfindungsgemäßen Verfahren zur Gewinnung von Erdwärme können auch weitere Maßnahmen zur Verringerung bzw. Vermeidung von Ablagerungen des warmen Mediums getroffen werden, wie z.B. Klopfverfahren, bei dem durch mechanische Krafteinwirkung bzw. Schwingungen Ablagerungen abgelöst werden, oder auch die Beigabe von insbesondere chemischen Stoffen zum warmen Medium, welche der Bildung von Ablagerungen entgegenwirken bzw. deren Entfernen vereinfacht.

Vorteilhafte Ausgestaltungen des ersten Aspekts der Erfindung sind in den entsprechenden Unteransprüchen 2 bis 7 angegeben und werden nachfolgend beschrieben.

Gemäß einer Ausführungsform des erfindungsgemäßen Verfahrens zur Gewinnung von Erdwärme durchfließen das warme Medium und das Wärmeübertragermedium den Wärmeübertrager bei Gleichstrom entlang derselben Strömungsrichtung und bei Gegenstrom entlang entgegengesetzter Strömungsrichtungen.

Gemäß einer weiteren Ausführungsform sind das warme Medium und das Wärmeübertragermedium voneinander getrennt, sodass diese sich nicht vermischen. Dies kann beispielsweise durch ein durch den Wärmeübertrager ausgebildeten Rohrbündelwärmeübertrager realisiert werden, wobei das warme Medium und das Wärmeübertragermedium den Wärmeübertrager in getrennten Rohren des Rohrbündelwärmeübertragers durchfließen.

In einer Ausführungsform des erfindungsgemäßen Verfahrens zur Gewinnung von Erdwärme wird lediglich die Strömungsrichtung des Wärmeübertragermediums gewechselt. Dabei kann das warme Medium fortwährend in eine vordefinierte Richtung strömen, ohne diese zu wechseln. Dies ist insbesondere deshalb vorteilhaft, da eine Umkehr der Strömungsrichtung des warmen Mediums kostenintensive Spezialpumpen erfordern würde. Stattdessen kann die Strömungsrichtung des Wärmeübertragermediums derart ausgerichtet und gewechselt werden, dass das Wärmeübertragermedium den Wärmeübertrager in Bezug zum warmen Medium entlang derselben Strömungsrichtung, d.h. bei Gleichstrom, oder entlang der entgegengesetzten Strömungsrichtung, d.h. bei Gegenstrom, durchfließt.

Gemäß einer weiteren Ausführungsform des erfindungsgemäßen Verfahrens zur Gewinnung von Erdwärme wird die Strömungsrichtung bei Absenkung der Temperatur des Wärmeübertragermediums auf 10 K unter das Temperaturniveau des warmen Mediums an derselben Position von Gegenstrom zu Gleichstrom umgekehrt.

Das bedeutet, dass eine Umschaltung von Gegenstrom auf Gleichstrom erfolgen kann, wenn eine Temperaturdifferenz zwischen dem warmen Medium und dem Wärmeübertragermedium einen definierten Wert überschreitet.

Die Temperaturmessung bezieht sich dabei auf denselben Ort des Wärmeübergangs, also beispielsweise bei einen Rohrbündelwärmeübertrager auf dieselbe Position an einem Rohr.

Die Strömungsrichtung kann auch bei einer Absenkung der Temperatur des warmen Mediums bei Unterschreiten einer Kristallisationstemperatur des warmen Mediums, insbesondere auf 140 °C oder weniger, wenn die Thermalwassertemperatur etwa 160 °C und mehr beträgt, mittels der Steuerungseinrichtung umgekehrt werden.

Ebenso kann ein Unterschreiten einer Wärmeübertragungseffizienz der Wärmeübertragung vom warmen Medium auf das Wärmeübertragermedium das Umschalten von Gegenstrom zu Gleichstrom bedingen.

Auch kann die Strömungsrichtung bei Erhöhung der Temperatur des Wärmeübertragermediums auf eine Temperatur, die sich innerhalb einer Temperaturdifferenz von 10 K in Bezug auf das Temperaturniveau des warmen Mediums an derselben Position befindet, von Gleichstrom zu Gegenstrom umgekehrt werden.

Die Strömungsrichtung kann auch bei einer Erhöhung der Temperatur des warmen Mediums bei Überschreiten der Kristallisationstemperatur des warmen Mediums, insbesondere auf 160 °C und mehr, von Gleichstrom zu Gegenstrom umgekehrt werden.

Eine Umschaltung von Gleichstrom auf Gegenstrom kann erfolgen, wenn eine Temperaturdifferenz zwischen dem warmen Medium und dem Wärmeübertragermedium einen definierten Wert unterschreitet.

Ein zweiter Aspekt der vorliegenden Erfindung betrifft ein Verfahren zur Erzeugung elektrischer Energie. Bei diesem Verfahren wird zunächst das erfindungsgemäße Verfahren zur Gewinnung von Erdwärme realisiert und das hierbei erwärmte Wärmeübertragermedium einer Umwandlungseinrichtung zur Umwandlung thermischer Energie in elektrische Energie zugeführt. Diese Umwandlungseinrichtung wandelt die thermische Energie schließlich zumindest teilweise in elektrische Energie um.

Die Umwandlungseinrichtung kann beispielsweise durch eine Turbine mit Generator gebildet sein. So kann die Turbine durch die im Verfahren zur Gewinnung von Erdwärme gewonnene thermische Energie insbesondere durch Dampfdruck in Rotation versetzt werden, sodass durch die Rotation der im angeschlossenen Generator elektrische Energie erzeugt werden kann.

Ein dritter Aspekt der vorliegenden Erfindung betrifft eine Vorrichtung zur Gewinnung von Erdwärme. Die Vorrichtung umfasst einen Wärmeübertrager, mit dem thermische Energie aus einem warmen Medium auf ein Wärmeübertragermedium übertragbar ist und der dazu eingerichtet ist, entlang zumindest einer Strömungsrichtung von dem warmen Medium und Wärmeübertragermedium durchflossen zu werden, sowie eine Steuerungseinrichtung, mit der eine Durchströmung des Wärmeübertragers zwischen einer Durchströmung in Gegenstrom und einer Durchströmung in Gleichstrom von warmem Medium und Wärmeübertragermedium gewechselt werden kann.

Vorteilhafte Ausgestaltungen dieses dritten Aspekts der Erfindung sind in den entsprechenden Unteransprüchen 10 bis 15 angegeben und werden nachfolgend beschrieben.

Gemäß einer Ausführungsform der erfindungsgemäßen Vorrichtung weist diese weiterhin zumindest eine Pumpeinrichtung zur Förderung des Wärmeübertragermediums auf. Die Pumpeinrichtung ist dabei vorzugsweise derart mit der Steuerungseinrichtung steuerbar, dass die Pumpeinrichtung die Strömungsrichtung des Wärmeübertragermediums umkehren kann.

In einer weiteren Ausführungsform der erfindungsgemäßen Vorrichtung ist der Wärmeübertrager ein Rohrbündelwärmeübertrager. Dabei kann der Rohrbündelwärmeübertrager insbesondere derart ausgebildet sein, dass das warme Medium innerhalb einzelner Rohre eines Rohrbündels den Rohrbündelwärmeübertrager durchströmt, wobei das Rohrbündel innerhalb eines dieses ummantelnden Mantelrohrs des Rohrbündelwärmeübertragers angeordnet ist. Das Wärmeübertragermedium kann dabei innerhalb des Mantelrohrs um das Rohrbündel strömen, sodass thermische Energie von dem warmen Medium auf das Wärmeübertragermedium übertragbar ist. Einzelne Rohre des Rohrbündels können innerhalb des Rohrbündelwärmeübertragers räumlich voneinander getrennt sein. Bei Betrieb der Vorrichtung ist ein vom Mantelrohr gebildeter Hohlraum idealerweise mit dem Wärmeübertragermedium gefüllt bzw. wird von diesem durchströmt. Durch eine solche Trennung einzelner Rohre des Rohrbündels wird vorteilhaft eine Wärmeübertragungsfläche der Rohre mit dem Wärmeübertragermedium vergrößert, sodass die von dem warmen Medium auf das Wärmeübertragermedium übertragbare thermische Energie vorteilhaft erhöht wird. In einem Rohrbündelwärmeübertrager können auch mehrere Rohrbündel vorhanden sein.

Gemäß einer weiteren Ausführungsform der erfindungsgemäßen Vorrichtung kann eines der Rohre des Rohrbündelwärmeübertragers mehrere zum Innenraum des betreffenden Rohres hin ausgerichtete konvexe Formelemente aufweisen.

In einer weiteren Ausführungsform weist das konvexe Formelement in seiner senkrecht zur Ebene der Oberfläche, an oder in der das konvexe Formelement angeordnet ist, und durch seinen höchsten Punkt verlaufenden Schnittebene eine Querschnittsfläche auf, die durch eine im Wesentlichen bogenförmige Kante sowie eine an die bogenförmige Kante angeschlossene Kante begrenzt ist, die im Wesentlichen als Tangente ausgeführt ist, wobei die als Tangente ausgeführte Kante in die Oberfläche übergeht. Durch derartige Formelemente werden, wenn das Rohr von einem Medium, insbesondere dem warmen Medium durchflossen wird, vorteilhaft Wirbelschichten bzw. turbulente Ströme im Bereich des konvexen Formelement erzeugt. Derartige Wirbelschichten bzw. turbulente Ströme wirken vorteilhaft Ablagerungen an den Rohrinnenwänden entgegen. Vorteilhafterweise weist jedes Rohr eine Vielzahl von derartigen konvexen Formelementen auf.

Nach einer Ausführungsform der vorliegenden Erfindung ist die Steuerungseinrichtung dazu eingerichtet, die Strömungsrichtung bei Absenkung der Temperatur des Wärmeübertragermediums auf 140 °C oder weniger von Gegenstrom zu Gleichstrom umzukehren. Die Strömungsrichtung kann auch bei einer Absenkung der Temperatur des warmen Mediums, insbesondere bei Unterschreiten einer Kristallisationstemperatur des warmen Mediums, mittels der Steuerungseinrichtung von Gegenstrom zu Gleichstrom umgekehrt werden.

Auch kann die Steuerungseinrichtung die Strömungsrichtung bei Überschreiten einer Temperaturdifferenz aus der Temperatur des warmen Mediums und der Temperatur des Wärmeübertragermediums von Gegenstrom zu Gleichstrom umkehren.

Ebenso kann ein Unterschreiten einer Wärmeübertragungseffizienz der Wärmeübertragung vom warmen Medium auf das Wärmeübertragermedium das Umschalten von Gegenstrom zu Gleichstrom mittels der Steuerungseinrichtung bedingen.

Es ist weiterhin vorgesehen, dass die Steuerungseinrichtung dazu eingerichtet ist, die Strömungsrichtung bei Erhöhung der Temperatur des Wärmeübertragermediums auf 160 °C und mehr von Gleichstrom zu Gegenstrom umzukehren. Die Strömungsrichtung kann auch bei einer Erhöhung der Temperatur des warmen Mediums, insbesondere bei Überschreiten der Kristallisationstemperatur des warmen Mediums, mittels der Steuerungseinrichtung von Gleichstrom zu Gegenstrom umgekehrt werden. Auch kann die Steuerungseinrichtung die Strömungsrichtung bei Unterschreiten einer Temperaturdifferenz aus der Temperatur des warmen Mediums und der Temperatur des Wärmeüberträgers von Gleichstrom auf Gegenstrom umkehren.

Weiterhin wird innerhalb derselben Anlage ein Verfahren zur Gewinnung wenigstens eines anorganischen Wertstoffs zur Verfügung gestellt, bei dem ein zumindest teilweise flüssiges, warmes Medium aus der Erde gefördert wird, und das warme Medium abgekühlt wird, sodass im sich abkühlenden oder abgekühlten, warmen Medium ein Fällungsprozess ausgelöst wird. Dabei wird wenigstens ein zuvor im warmen Medium zumindest teilweise gelöst vorliegender anorganischer Wertstoff zumindest teilweise ausgefällt wird und dem warmen Medium entnommen. Das warme Medium kann dabei sogenanntes Thermalwasser sein. Aus dem Thermalwasser lässt sich beispielsweise Bariumsulfat durch Ausfällen gewinnen. Bariumsulfat kann vorteilhaft Anwendung finden in der Herstellung von schalldämpfenden Stoffen. Da die Löslichkeit von Salzen in Wasser mit zunehmender Temperatur steigt, kommt es zu Ausfällungen in etwa in dem Maße, wie die Temperatur des warmen Mediums abnimmt.

Das Verfahren zur Gewinnung wenigstens eines anorganischen Wertstoffs kann derart ausgeführt werden, dass das warme Medium zur Abkühlung in einen Wärmeübertrager geleitet und in dem Wärmeübertrager unter Abgabe von thermischer Energie von dem warmen Medium auf ein Wärmeübertragermedium abgekühlt wird.

Eine weitere Möglichkeit der Ausführung des Verfahrens zur Gewinnung wenigstens eines anorganischen Wertstoffs besteht darin, dass zumindest ein weiterer Wertstoff durch schwerkraftbedingte Absetzung aus dem warmen Medium gelöst wird. Ein derartiger weiterer Wertstoff kann beispielsweise Lithiumchlorid sein. Lithiumchlorid lässt sich nicht ausfällen, aber Lithiumchlorid kann durch schwerkraftbedingte Absetzung aus dem warmen Medium abgetrennt bzw. gewonnen werden. Lithiumchlorid findet in der Lithium-Nickel- oder Lithium-Kobalt-Kombination unter anderem Anwendung in der Herstellung elektrischer Energiespeicher.

Zudem kann das Verfahren derart ausgeführt werden, dass neben dem anorganischen Wertstoff wenigstens ein im warmen Medium zumindest teilweise gelöst vorliegender und durch den Fällungsprozess ebenfalls zumindest teilweise ausgefällter Feststoff dem warmen Medium entnommen wird.

Nach der Abkühlung des warmen Mediums kann der zumindest teilweise ausgefällte anorganische Wertstoff und/oder der Feststoff mittels zumindest eines der folgenden Verfahren separiert werden: Filtrieren, Sedimentation, Zentrifugieren. Nach der Separierung kann eine Entnahme des anorganischen Wertstoffs und/oder des Feststoffs aus einer das Verfahren zur Gewinnung wenigstens eines anorganischen Wertstoffs umsetzenden Anlage vorgenommen werden.

Der entnommene Feststoff kann - insbesondere mittels Ultraschalls - zerkleinert und zur Verfügung gestellt werden. Entsprechend können beispielsweise korrosiv wirkende Feststoffe und/ oder Verunreinigungen bildende Feststoffe zunächst dem Verfahren entzogen werden, um keine schädlichen Wirkungen zu entfalten.

Nach der Entnahme des anorganischen Wertstoffs, des Feststoffes und/oder des weiteren Wertstoffs können das im Wesentlichen feststofffreie warme Medium und der zerkleinerte Feststoff zu einer Suspension vermischt werden.

Die erhaltene Suspension kann in die Erde zurückgeführt werden. Diese Vorgehensweise hat den vorteilhaften Effekt, dass gegebenenfalls in der Suspension enthaltene radioaktive Stoffe nicht an der Erdoberfläche bleiben. Zudem besteht auch hinsichtlich korrosiv wirkender Feststoffe und/ oder Verunreinigungen bildender Feststoffe keine Entsorgungsproblematik, und es wird dem geltenden Bergrecht gefolgt.

Zumindest während dem Abkühlungsprozess im warmen Medium enthaltenes Gas kann zumindest teilweise durch Gasabscheidung von dem warmen Medium getrennt werden.

Thermische Energie des Thermalwassers bzw. des warmen Mediums kann zur Umwandlung in elektrische Energie und/ oder für Fernwärme genutzt werden.

Weiterhin wird eine Vorrichtung zur Gewinnung wenigstens eines anorganischen Wertstoffs und demzufolge zur Durchführung des Verfahrens zur Gewinnung wenigstens eines anorganischen Wertstoffs zur Verfügung gestellt. Die Vorrichtung weist eine Fördereinrichtung zur Förderung von zumindest teilweise flüssigem, warmem Medium aus der Erde auf, sowie eine Abkühlungseinrichtung zur Abkühlung des warmen Mediums und Ausführung eines Fällungsprozesses wenigstens eines im warmen Medium vorhandenen, zumindest teilweise gelöst vorliegenden anorganischen Wertstoffs. Des Weiteren umfasst die Vorrichtung zur Gewinnung wenigstens eines anorganischen Wertstoffs eine Abzugseinrichtung zur zumindest teilweisen Entnahme des ausgefällten anorganischen Wertstoffs aus dem warmen Medium.

Die Abkühlungseinrichtung kann zumindest einen Wärmeübertrager umfassen. In einer speziellen Ausführungsform gibt es eine Reihenschaltung von mehreren Wärmeübertrager, die eine Abkühlung des warmen Mediums auf unterschiedliche Temperaturen bewirken, um derart durch entsprechende Ausfällung unterschiedliche Feststoffe bzw. Wertstoffe zu erhalten. Das heißt, dass die Vorrichtung zur Gewinnung wenigstens eines anorganischen Wertstoffs auch ein System von Vorrichtungen betrifft, die hinsichtlich der Behandlung des warmen Mediums in Reihe geschaltet sind.

Der Wärmeübertrager und die Abzugseinrichtung können derart vertikal übereinander angeordnet sein, dass, wenn die Abzugseinrichtung und der Wärmeübertrager von dem warmen Medium durchflossen werden, der zumindest eine im warmen Medium enthaltene, zumindest teilweise ausgefällte anorganische Wertstoff, der weitere Wertstoff und/oder der zumindest teilweise ausgefällte Feststoff sich durch Sedimentation in der Abzugseinrichtung sammelt und dort dem warmen Medium entnehmbar ist.

Um die Mineralien gezielt entnehmen zu können, die hinsichtlich ihrer Ausfällungstemperatur aufgrund ihrer Stellung im Periodensystem relativ nahe beieinander liegen, ist es sinnvoll, an deren Löslichkeitsgleichung anzusetzen. Dies kann über CO2 erfolgen, dass durch eine Druckreduzierung vom Betriebsregiment entnommen und später entsprechend den Löslichkeitsanforderungen zugesetzt wird. Die ermöglicht eine Fraktionierung der Mineralien, und diese gezielt entnehmen zu können.

Das bedeutet, dass die Abkühlung des Thermalwassers im Abscheidungsbereich bzw. Absetzungsbereich des Wärmeübertragers unten stattfindet. Der Wärmeübertrager kann dabei senkrecht ausgerichtet sein. Die Abzugseinrichtung kann dabei außerdem zum Filtrieren und/ oder Zentrifugieren eingerichtet sein. Bei senkrechter Anordnung konzentrieren sich Gase im mittleren Bereich des Wärmeübertragers und können sogenannte Pfropfen bilden, infolge derer größere Turbulenzen auftreten, die die Wärmeübertragung verbessern.

In einem oberen Bereich des Wärmeübertragers können die Gase gesammelt und abgezogen werden. Mittels einer Gassammelleitung können die Gase dem abgekühlten Thermalwasser wieder zugeführt werden

Das bedeutet, dass in dieser Ausführungsform im unteren Bereich des Wärmeübertragers ein Auffangen von Stoffen, insbesondere Feststoffen erfolgt. Die anorganischen Wertstoffe wie z.B. Lithium-Verbindungen werden dann aus diesem Auffangbereich des Wärmeübertragers herausgeholt.

Dadurch lässt sich insbesondere eine optimale Entfernung wie z.B. von Bariumsulfat und/ oder Lithium-Verbindungen realisieren, und gleichzeitig eine Aufbereitung des Wassers.

Die Abzugseinrichtung kann zumindest ein Prallblech aufweisen, welches dazu ausgebildet ist, wenn der Wärmeübertrager und die Abzugseinrichtung von dem warmen Medium durchflossen werden, das einströmende warme Medium umzulenken und derart eine Zentrifugalkraft auf das einströmende warme Medium zu bewirken, sodass der im warmen Medium enthaltene, zumindest teilweise ausgefällte anorganische Wertstoff, der Feststoff und/oder ein weiterer Wertstoff in der Abzugseinrichtung zumindest teilweise separierbar und dem warmen Medium entnehmbar sind.

Beispielsweise können Lithium-Verbindungen aufgrund von Zentrifugalkraft, die durch das Prallblech bewirkt wird, abgeschieden werden.

Das Prallblech kann sich dabei im unteren Bereich des Wärmeübertragers befinden.

Der verwendete Wärmeübertrager ein kann ein Rohrbündelwärmeübertrager sein, wobei zumindest eines der Rohre des Rohrbündelwärmeübertragers mehrere zum Innenraum des betreffenden Rohres hin ausgerichtete konvexe Formelemente aufweist.

Ein jeweiliges konvexes Formelement kann in seiner senkrecht zur Ebene der Oberfläche, an oder in der das konvexe Formelement angeordnet ist, und durch seinen höchsten Punkt verlaufenden Schnittebene eine Querschnittsfläche aufweisen, die durch eine im Wesentlichen bogenförmige Kante sowie eine an die bogenförmige Kante angeschlossene Kante begrenzt ist, die im Wesentlichen als Tangente ausgeführt ist, wobei die als Tangente ausgeführte Kante in die Oberfläche übergeht.

Neben den konvexen Formelementen können die Rohre des Wärmeübertragers auch noch sogenannte Mikrostrukturen aufweisen, deren maximales geometrisches Abmaß 0,01 mm nicht übersteigt.

Die konvexen Formelemente erzeugen starke Verwirbelungen, die der Ablagerung von Feststoffen entgegenwirken. Eine Antifouling-Wirkung kann auch durch geeignete Mikrostrukturen erzeugt werden.

Weiterhin wird unter Nutzung derselben Anlage ein Verfahren zur Nutzung von Erdwärme zur Verfügung gestellt, bei dem ein zumindest teilweise flüssiges, warmes Medium aus der Erde gefördert wird, in einen Wärmeübertrager geleitet wird, und in dem Wärmeübertrager thermische Energie aus dem warmen Medium auf ein Wärmeübertragermedium übertragen wird. Das warme Medium wird nach Übertragung von Wärme aus dem warmen Medium im Wärmeübertrager wieder in die Erde zurückgeführt, und das erwärmte Wärmeübertragermedium wird einer Nutzung der Wärme des Wärmeübertragermediums zugeführt.

Die genutzte Erdwärme ist hier thermische Energie von Thermalwasser aus der Erde.

Der Vorteil dieses Verfahrens zur Nutzung von Erdwärme liegt insbesondere darin, dass radioaktive Bestandteile des warmen Mediums nicht bis in Anlagen führt werden, in denen die Nutzung der Wärme des warmen Mediums erfolgt, sondern dass das warme Medium einen eigenen Kreislauf nicht verlässt und demzufolge innerhalb kürzester Zeit wieder in die Erde re-injiziert werden kann. Entsprechend fallen keine radioaktiven Abfälle an der Erdoberfläche an.

Ein weiterer Vorteil dieser Vorgehensweise ist, dass der dem sogenannten Bergrecht unterworfene Bereich, in dem das warme Medium bzw. das Thermalwasser bewegt wird, verfahrenstechnisch sehr klar getrennt ist vom Bereich der Nutzung der Wärme des Thermalwassers.

Wärme des Wärmeübertragermediums kann zumindest anteilig in elektrische Energie umgewandelt werden. Das Wärmeübertragermedium kann dabei sauberes, feststofffreies und konditioniertes Wasser, pH-Wert-neutral im Betriebszustand, sein.

Zwecks Umwandlung von Wärme in elektrische Energie kann das Wärmeübertragermedium einem Wärmetauscher zugeleitet werden, in dem Wärme des Wärmeübertragermediums auf ein Wärmetauschermedium im Wärmetauscher übertragen wird, und das Wärmetauschermedium kann einer Umwandlungseinrichtung zur Umwandlung von Wärme in elektrische Energie zugeleitet werden. Eine derartige Umwandlungseinrichtung zur Umwandlung von Wärme in elektrische Energie kann insbesondere eine Dampfturbine mit angeschlossenem Generator sein, die in der Lage ist, die Wärme von dampfförmigem Wärmetauschermedium in elektrische Energie umzuwandeln.

Der hier benannte Wärmetauscher hat ebenfalls die Funktion eines Wärmeübertragers, so dass das Wärmetauschermedium entsprechend ebenfalls auch die Funktion eines Wärmeübertragermediums hat.

Der Kreislauf des Wärmeübertragermediums bildet somit einen sogenannten Zwischenkreis aus. In diesem Zwischenkreis wird das Wärmetauschermedium dem Wärmetauscher kalt zugeführt und warm wieder abgeführt, wobei Wärme vom Wärmeübertragermedium im Wärmetauscher auf das Wärmetauschermedium übertragen wird.

Die Umwandlung der Wärme des Wärmetauschermediums in elektrische Energie kann in einem ORC-Prozess durchgeführt werden. Der ORC-Prozess bedeutet "Organic Rankine Cycle" und ist ein Verfahren des Betriebs von Dampfturbinen mit einem anderen Arbeitsmedium als Wasserdampf.

Als Arbeitsmedium im ORC-Prozess kann Isopentan oder ein wässriges Medium wie z.B. eine Ammoniak-Lösung genutzt werden. Das Arbeitsmedium im ORC-Prozess wird von einem unterkühlten Zustand in den Sattdampfzustand überführt.

In wenigstens einem Behälter und/ oder, Apparat zur Aufnahme warmen Mediums und/ oder in wenigstens einer Leitung zur Aufnahme warmen Mediums kann ein Reinigungsverfahren zur Verhinderung oder Verminderung von Ablagerungen durchgeführt werden, bei dem Druckgas-Impulse mit hoher Geschwindigkeit in den Behälter bzw. in die Leitung eingebracht werden. Das komprimierte Gas expandiert im Inneren des Behälters bzw. der Leitung und entwickelt gezielt Kräfte zum Austrag der Ablagerungen. Mittels einer Flüssigkeit, wie zum Beispiel mit Wasser, können die abgetragenen Ablagerungen ausgespült werden.

Der Behälter kann ein Rohr, eine Armatur und oder ein Apparat zur Aufnahme warmen Mediums sein.

In der Turbine wird der organische Wärmeträger bzw. das Arbeitsmedium entspannt, wobei zugleich die Temperatur des Arbeitsmedium auf etwa 40°C sinkt.

Das Temperaturregime des gesamten Prozesses ist so eingestellt, dass sich eine optimale Pinchtemperatur im Zwischenkreis, beispielsweise lediglich 3 K ergibt. Die Optimalkriterien sind dabei Maximierung der auszukoppelnden Fernwärmeleistung, entsprechende Abstimmung der elektrischen Auskopplung und/ oder Anpassung der Reinigungsintervalle, so dass sich möglichst kleine exergetischen Verluste durch etwaige Verunreinigungen ergeben, und Anpassung der Parameter Druck und Massenstrom im ORC-Prozess. Die Einführung des Zwischenkreises macht die Wärme- und Stromauskopplung weitgehend unabhängig von der primären Wärmeübertragung im Wärmeübertrager. Entsprechend kann die Wärmeübertragung im Wärmeübertrager freier gestaltet werden, was die Gewinnung von Nutzstoffen erleichtert.

Weiterhin kann Abwärme aus einer im ORC-Prozess genutzten Turbine als Kühlenergie genutzt werden. Die Abwärme kann beispielsweise in Absorptionskälteanlagen genutzt werden, um Kältemittel zu verdampfen. Dabei ist das vorliegende Verfahrens zur Nutzung von Erdwärme nicht darauf eingeschränkt, dass Abwärme lediglich eine im ORC-Prozess genutzten Turbine für Kühlungszwecke genutzt wird, sondern es kann auch Abwärme einer jeglichen Turbine für Kühlungszwecke genutzt werden.

Alternativ oder hinzukommend zur Umsetzung von Wärme in elektrische Energie kann Wärme des Wärmeübertragermediums zumindest anteilig zu Heizzwecken genutzt werden. Dabei kann Fernwärme ein Heizzweck sein, so dass Wärme des Wärmeübertragermediums beispielsweise einem Fernwärmeübertrager zugeführt wird. Der Fernwärmeübertrager nimmt den Rücklauf aus einem Fernwärmenetz auf und hebt die Temperatur auf die Vorlauftemperatur an. Übliche Temperaturspreizungen sind von 50°C auf 100°C. Diese Temperaturspreizung ist geringer als die des Wärmeübertragermediums des Zwischenkreis, dessen Temperatur auf einen Wert von etwa 50°C absinken kann. Entsprechend sind die Massenströme durch und um die Rohre des Fernwärmeübertragers entsprechend anzupassen.

Das bedeutet, dass die Wärme des warmen Mediums sowohl für Heizzwecke, wie zum Beispiel für die Zurverfügungstellung von Fernwärme, genutzt werden kann, als auch für die Umsetzung in elektrische Energie. Diese Nutzung der Wärme des warmen Mediums kann dabei gleichzeitig erfolgen. Das bedeutet, dass hohe Flexibilität besteht, denn wenn beispielsweise keine Heizwärme angefordert wird, sämtliche Wärmeenergie zur Umwandlung in elektrische Energie genutzt werden kann.

Zudem ermöglicht diese Verfahrensweise, dass bei einer Vorrangigkeit der Nutzung der Wärme des warmen Mediums für Heizzwecke die Verfahrensstrecke zur Umsetzung von Wärme des warmen Mediums in elektrische Energie als Puffer dienen kann, so dass bei geringer Anforderung an Heiz-Wärme ein erhöhter Anteil der Wärme des warmen Mediums für die Umwandlung in elektrische Energie zur Verfügung gestellt werden kann, und bei Anstieg des Wärmebedarfs für Heizzwecke nur noch ein geringerer Anteil an Wärme des warmen Mediums in elektrische Energie umgesetzt wird und entsprechend mehr Wärme für Heizzwecke zur Verfügung gestellt werden kann.

Das Wärmeübertragermedium kann dem Wärmetauscher zugeleitet werden, in dem Wärme des Wärmeübertragermediums auf ein Wärmetauschermedium im Wärmetauscher übertragen wird, und entsprechend abgekühltes Wärmeübertragermedium kann zu wenigstens einem Heizzweck genutzt werden. Entsprechend ist hier eine direkte Nutzung der Wärme des Wärmeübertragermediums vorgesehen. Dabei kann das Verfahren derart ausgestaltet sein, dass der Wärmetauscher den heißen Wärmeübertragermedium-Strom aufnimmt und soweit abkühlt, wie es die thermische Anforderung eines dem Wärmetauscher nachgeschalteten Fernwärmeübertragers erforderlich macht.

Eine vorteilhafte Ausführungsform des Verfahrens sieht vor, dass der Druck des Wärmeübertragermediums maximal 14 bar beträgt. Das bedeutet, dass der Zwischenkreis mit geringem Druck gefahren werden kann.

In weiterer vorteilhafter Ausführungsform ist vorgesehen, dass die Eintrittstemperatur des warmen Mediums beim Einlass in den Wärmeübertrager zwischen 150 °C und 170 °C beträgt und die Austrittstemperatur des warmen Mediums beim Auslass aus dem Wärmeübertrager kann zwischen 50 °C und 70 °C beträgt. Insbesondere kann die Eintrittstemperatur des warmen Mediums 160°C betragen, und die Austrittstemperatur des warmen Mediums kann 60°C betragen. Entsprechend ist eine Temperaturspreizung von ca. 100°C eingestellt. Die Temperaturen des Wärmeübertragermediums für den Zwischenkreis sind möglichst nahe an die des warmen Mediums heranzuführen, um einen bei der Wärmeübertragung auftretenden exergetischen Verlust so gering wie möglich zu halten.

Des Weiteren wird eine Einrichtung zur Nutzung von Erdwärme zur Verfügung gestellt, welche eine Fördereinrichtung zur Förderung von zumindest teilweise flüssigem, warmem Medium aus der Erde einen Wärmeübertrager, mit dem thermische Energie aus dem warmen Medium auf ein Wärmeübertragermedium übertragbar ist, eine Rückführung, mit der das warme Medium nach Übertragung von Wärme im Wärmeübertrager wieder in die Erde zurückführbar ist, sowie eine Einrichtung zur Nutzung der Wärme des Wärmeübertragermediums aufweist.

Die Einrichtung zur Nutzung von Erdwärme ist somit dazu eingerichtet, das Verfahren zur Nutzung von Erdwärme auszuführen.

Die Einrichtung zur Nutzung der Wärme des Wärmeübertragermediums kann eine Umwandlungseinrichtung zur Umwandlung von Wärme des Wärmeübertragermediums in elektrische Energie und/ oder eine Heizeinrichtung zur Nutzung von Wärme des Wärmeübertragermediums zu wenigstens einem Heizzweck umfassen. Dabei kann die Umwandlungseinrichtung zur Umwandlung von Wärme des Wärmeübertragermediums in elektrische Energie eingerichtet sein, einen ORC-Prozess auszuführen. Eine derartige Umwandlungseinrichtung zur Umwandlung von Wärme in elektrische Energie kann insbesondere eine Dampfturbine mit angeschlossenem Generator sein.

Die Einrichtung zur Nutzung der Wärme des Wärmeübertragermediums kann einen Wärmetauscher umfassen, in dem Wärme des Wärmeübertragermediums auf ein Wärmetauschermedium im Wärmetauscher übertragbar ist, und von dem das Wärmetauschermedium der Umwandlungseinrichtung zur Umwandlung von Wärme in elektrische Energie zuleitbar ist.

Der Turbine der Umwandlungseinrichtung zur Umwandlung von Wärme in elektrische Energie kann ein Kondensator nachgeschaltet sein, der den aus der Turbine kommenden entspannten Dampf verflüssigt. Stromabwärts des Kondensators kann eine Zirkulationspumpe zur Druckerhöhung des abgekühlten Arbeitsmediums im Zwischenkreis integriert sein. Weiterhin kann der Zwischenkreis eine Kompensatorstrecke zur Ausgleichung von Wärmedehnungen bei Teillastfällen aufweisen. Ein Heizzweck kann die Zurverfügungstellung von Fernwärme sein, so dass die vorliegende Einrichtung zur Nutzung von Erdwärme weiterhin einen Fernwärmeübertrager aufweisen kann.

Der Wärmetauscher kann derart eingerichtet und angeschlossen sein, dass mit dem Wärmetauscher Wärme des Wärmeübertragermediums auf ein Wärmetauschermedium im Wärmetauscher übertragbar ist, und entsprechend abgekühltes Wärmeübertragermedium zu wenigstens einem Heizzweck aus dem Wärmetauscher weiterleitbar ist.

Eine vorteilhafte Ausführungsform des Wärmetauschers sieht vor, dass der Wärmetauscher an wenigstens einer der Wärmeübertragung dienenden Oberfläche mehrere konvexe Formelemente und/ oder eine Mikrostrukturierung aufweist.

Das heißt, dass der Wärmetauscher ein Platten- Wärmetauscher sein kann, der mit Mikrostruktur ausgestattet ist, um relativ schwer verdampfbares Arbeitsmedium verdampfen zu können.

Die Mikrostruktur kann durch zumindest einen Bereich ausgebildet sein, der eine gemittelte Rautiefe Rz 100 bis Rz 1000 zwecks Vergrößerung der Oberfläche zur Erhöhung der Intensität des Wärmeüberganges von der Oberfläche in ein Fluid aufweist. Die die Rauheit bewirkende Struktur kann durch eine Mehrzahl von Sicken ausgebildet sein, wobei die raue Oberfläche mittels Elektronenstrahlen, Elektroerodieren, Schleifen, mittels Laser und/ oder Korrosion erzeugt sein kann.

Zusätzlich zur Mikrostruktur kann noch eine Makrostruktur in Form von mehreren konvexen Formelementen vorhanden sein. Der derart ausgebildete Wärmetauscher kann dabei wenigstens eine Wand mit einer Oberfläche aufweisen, in der konvexe Formelemente ausgebildet sind, wobei ein jeweiliges konvexes Formelement symmetrisch ausgebildet sein kann, oder in seiner senkrecht zur Ebene der Oberfläche und durch seinen höchsten Punkt verlaufenden Schnittebene eine Querschnittsfläche aufweisen kann, die durch eine bogenförmige Kante sowie eine an die bogenförmige Kante angeschlossene Kante begrenzt ist, die als Tangente ausgeführt ist, wobei die als Tangente ausgeführte Kante in die Oberfläche übergeht. Weiterhin kann ein konvexes Formelement derart ausgebildet sein, dass die Form des konvexen Formelementes in einer in der Ebene der Oberfläche verlaufenden Schnittebene der Form des konvexen Formelementes in seiner senkrecht zur Ebene der Oberfläche und durch seinen höchsten Punkt verlaufenden Schnittebene sowie einer Spiegelung dieser Form um die Ebene der Oberfläche entspricht, wobei das konvexe Formelement in der in der Ebene der Oberfläche verlaufenden Schnittebene eine Querschnittsfläche aufweist, deren Form im Wesentlichen einer Fläche entspricht, die aus der senkrecht zur Ebene der Oberfläche verlaufenden Querschnittsfläche, die durch die bogenförmige Kante sowie die an die bogenförmige Kante als Tangente angeschlossene Kante begrenzt ist, und einer axialsymmetrischen Spiegelung dieser Querschnittsfläche gebildet ist, wobei die axialsymmetrische Spiegelung dabei in der senkrecht zur Ebene der Oberfläche verlaufenden Schnittebene an der durch die Oberfläche definierten Querschnittskante erfolgt, so dass das konvexe Formelement in der in der Ebene der Oberfläche verlaufenden Schnittebene die Form eines Tropfens aufweist.

Zur Aufrechterhaltung einer möglichst hohen Wärmeübertragung kann eine Sensorik vorhanden sind, in einen sehr frühen Stadium Ausfällungen misst. Um den Effekt von sich selbst potentiell steigernden weiteren Ausfällungen zu vermeiden, kann entsprechend zu einem möglichst optimalen Zeitpunkt ein Verfahren genutzt werden, welches auf einer automatisierten und hoch effektiven sogenannten Impulsspülung basiert. Hierbei werden exakt gesteuerte und den Anforderungen angepasste Druckgas-Impulse mit hoher Geschwindigkeit und/ oder Beschleunigung in die Leitungen, wie z.B. Rohrleitungen und/ oder Behälter wie z.B. Apparate oder auch in Armaturen eingebracht. Das komprimierte Gas expandiert im Inneren der Rohre bzw. Behälter, Armaturen und/ oder Apparate und entwickelt gezielt Kräfte zum Austrag der Ablagerungen. Mittels einer Flüssigkeit, wie zum Beispiel mit Wasser, können die abgetragenen Ablagerungen ausgespült werden.

Durch diese intelligente sich selbst überwachende und einen Selbstreinigungseffekt bewirkende Vorgehensweise werden klassische minimale Verluste, die im Betrieb eines Wärmeübertragers entstehen, weitgehend überkompensiert.

Im Folgenden sollen Ausführungsbeispiele sowie weitere Merkmale und Vorteile der Erfindung anhand der Figuren erläutert werden. Es zeigen:
- Fig. 1: ein erstes Ausführungsbeispiel der Vorrichtung zur Gewinnung von Erdwärme mit einem Rohrbündelwärmeübertrager,
- Fig. 2: ein zweites Ausführungsbeispiel der Vorrichtung zur Gewinnung von Erdwärme mit einem Rohrbündelwärmeübertrager,
- Fig. 3: ein Diagramm mit dem Kurvenverläufen von Temperaturen im Wärmeübertrager des warmen Mediums sowie des Wärmeübertragermediums, sowohl bei Gleichstrom als auch bei Gegenstrom.
- Figur 4:: ein das Verfahren zur Gewinnung wenigstens eines anorganischen Wertstoffs verdeutlichendes Schaubild, mit einer Mehrfachanordnung von Wärmeübertragern sowie einer schematischen Darstellung des Zwischenkreises in einer Gesamt-Übersicht
- Figur 5:: einen verwendeten Wärmeübertrager in Schnittansicht;
- Figur 6:: eine schematische Darstellung einer herkömmlichen Nutzung der Wärmeenergie von Thermalwasser, und
- Figur 7:: eine schematische Darstellung des Zwischenkreises.

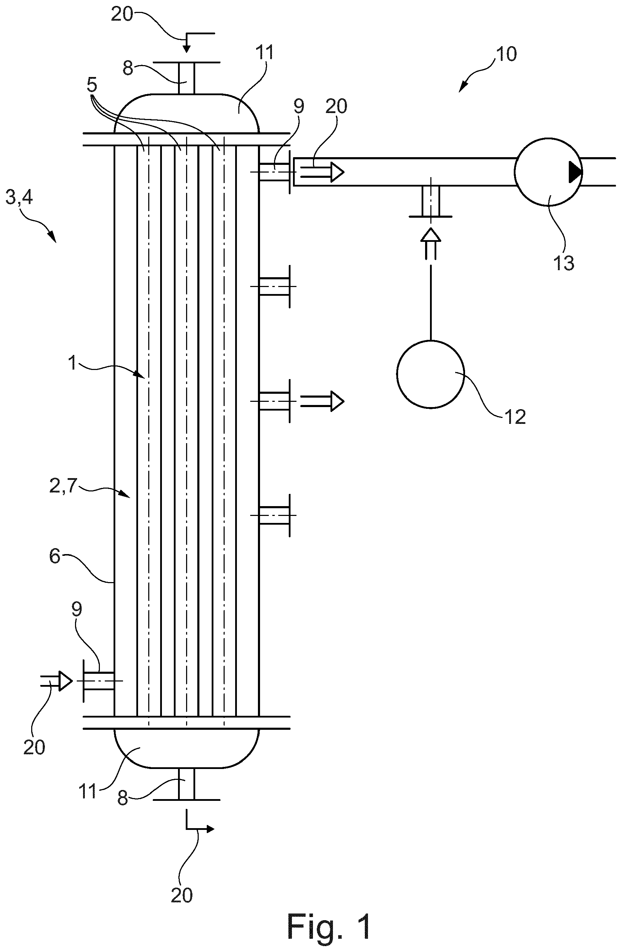

Figur 1 zeigt ein erstes Ausführungsbeispiel der Vorrichtung 10 zur Gewinnung von Erdwärme mit einem Wärmeübertrager 3. Dieser Wärmeübertrager 3 ist als Rohrbündelwärmeübertrager 4 ausgebildet und hier in einem Querschnitt gezeigt. Der Rohrbündelwärmeübertrager 4 weist ein Mantelrohr 6 sowie eine Vielzahl von Rohren 5 auf. Die Rohre 5 befinden sich dabei innerhalb eines durch das Mantelrohr 6 ausgebildeten Innenraums 7 des Mantelrohrs 6. Bei Betrieb der Vorrichtung 10 wird der Innenraum 7 des Mantelrohrs 6 vorzugsweise durch das Wärmeübertragermedium 2 durchflossen, während die Rohre 5 von dem warmen Medium 1 durchflossen werden. Hierfür weist der Rohrbündelwärmeübertrager 4 Anschlüsse 8,9 auf, über die das warme Medium 1 bzw. das Wärmeübertragermedium 2 in den Rohrbündelwärmeübertrager 4 ein- und/oder ausgeleitet werden kann. Die Anschlüsse 8 für das warme Medium 1 können zwischen den Rohren 5 und den Anschlüssen 8 angeordnete Verteiler 11 aufweisen, über welche das warme Medium 1 fluiddicht in die Rohre 5 bzw. aus den Rohren 5 geführt werden kann. Die Rohre 5 und das Mantelrohr 6 sind jeweils fluiddicht ausgebildet, sodass einerseits das warme Medium 1 sich nicht mit dem Wärmeübertragermedium 2 vermischt und andererseits das warme Medium 1 und das Wärmeübertragermedium 2 nur über die dafür vorgesehenen Anschlüsse 8,9 in den bzw. aus dem Rohrbündelwärmeübertrager 4 gelangen können. Durch die Vielzahl von Rohren 5 wird vorteilhaft eine gegenüber weniger Rohren 5 vergrößerte Wärmeübertragungsfläche zwischen den Rohren 5 und dem Wärmeübertragermedium 2 erreicht, was einen größeren Wärmeübertrag von dem warmen Medium 1 auf das Wärmeübertragermedium 2 zur Folge hat, wenn die beiden Medien 1,2 durch den Rohrbündelwärmeübertrager 4 strömen.

Weiterhin weist die in Figur 1 gezeigte Vorrichtung 10 eine Steuerungseinrichtung 12 sowie eine Pumpeinrichtung 13 auf. Die Steuerungseinrichtung 12 ist dazu ausgebildet, die Durchströmung durch den Rohrbündelwärmeübertrager 4 zwischen einer Durchströmung in Gleichstrom und einer Durchströmung in Gegenstrom von warmem Medium 1 und Wärmeübertragermedium 2 zu wechseln. Die Pumpeinrichtung 13 ist dazu ausgebildet, das Wärmeübertragermedium 2 zu fördern, wobei die Pumpeinrichtung 13 derart mit der Steuerungseinrichtung 12 steuerbar ist, dass die Pumpeinrichtung 13 eine Strömungsrichtung 20 des Wärmeübertragermediums 2 umkehren kann. Im hier dargestellten ersten Ausführungsbeispiel der Vorrichtung 10 durchströmt das warme Medium 1 den Rohrbündelwärmeübertrager 4 bzw. die Rohre 5 wie durch Pfeile angedeutet entlang einer Strömungsrichtung 20 innerhalb der Zeichenebene von oben nach unten. Dagegen durchströmt das Wärmeübertragermedium 2 den Rohrbündelwärmeübertrager 4 bzw. das Mantelrohr 6 wie durch Pfeile angedeutet entlang einer Strömungsrichtung 20 in der Zeichenebene von unten nach oben. Somit durchströmen das warme Medium 1 und das Wärmeübertragermedium 2 den Rohrbündelwärmeübertrager 4 in dieser Momentaufnahme in Gegenstrom. Über die Steuerungseinrichtung 12 und die Pumpeinrichtung 13 kann jedoch die Strömungsrichtung 20 des Wärmeübertragermediums 2 umgekehrt werden, sodass das warme Medium 1 und das Wärmeübertragermedium 2 den Rohrbündelwärmeübertrager 4 auch in Gleichstrom durchströmen können. Durch ein Wechseln zwischen Gleichstrom und Gegenstrom kann die Temperatur des warmen Mediums 1 innerhalb der Rohre 5 abrupt erhöht bzw. verringert werden. Durch den damit einhergehenden Thermoschock und das Absenken der Temperatur des warmen Mediums 1 unterhalb dessen Kristallisationstemperatur 40 werden Ablagerungen des warmen Mediums 1 innerhalb der Rohre 5 vorteilhaft abgebaut bzw. entfernt. Somit kann die Vorrichtung 10 unter Wechseln der Strömungsrichtung 20 des Wärmeübertragermediums 2 insgesamt effizient thermische Energie von dem warmen Medium 1 auf das Wärmeübertragermedium 2 übertragen, ohne dass durch zumindest teilweises Verstopfen der Rohre 5 die Effizienz der Wärmeübertragung verringert wird.

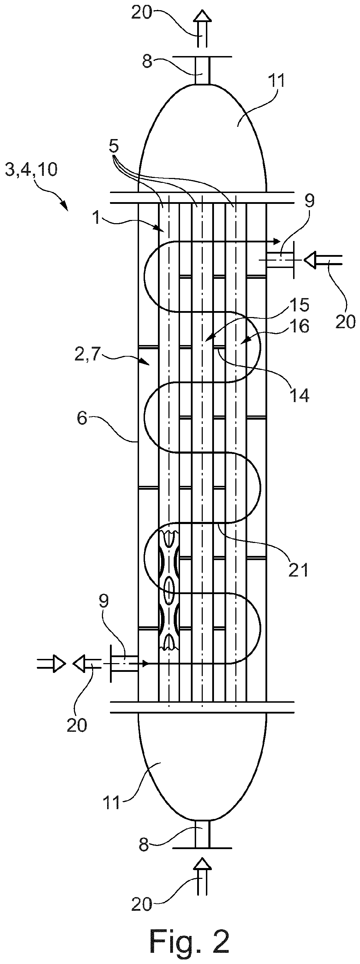

In Figur 2 ist ein zweites Ausführungsbeispiel der Vorrichtung 10 zur Gewinnung von Erdwärme dargestellt. Auch hier ist ein Wärmeübertrager 3 der Vorrichtung 10 als Rohrbündelwärmeübertrager 4 ausgebildet und im Querschnitt gezeigt. Analog zu Figur 1 weist der hier gezeigte Rohrbündelwärmeübertrager 4 ein äußeres Mantelrohr 6 auf, in dessen Innenraum 7 mehrere Rohre 5 verlaufen. Das warme Medium 1 kann dabei über entsprechende Anschlüsse 8 und Verteiler 11 durch die Rohre 5 strömen, während das Wärmeübertragermedium 2 über Anschlüsse 9 durch das Mantelrohr 6 um die Rohre 5 durch den Rohrbündelwärmeübertrager 4 strömen kann, sodass thermische Energie vom warmen Medium 1 auf das Wärmeübertragermedium 2 übertragen werden kann.

Weiterhin sind in diesem zweiten Ausführungsbeispiel Umlenkelemente 14 vorhanden. Diese Umlenkelemente 14 sind derart im Innenraum 6 zwischen dem Mantelrohr 6 und den Rohren 5 angeordnet, dass die Durchströmung des Wärmeübertragermediums 2 mittels der Umlenkelemente 14 angepasst werden kann. Wie in Figur 2 gezeigt, verlaufen die Rohre 5 im gezeigten Querschnitt durch den Rohrbündelwärmeübertrager 4 bündig durch Aussparungen 15, sodass ein Durchströmen des Wärmeübertragermediums 2 entlang der in Figur 2 gezeigten Strömungsrichtung 20, welche hier innerhalb der Zeichenebene von oben nach unten verläuft, lokal im Bereich der Umlenkelemente 14 und der Aussparungen 15, durch welche die Rohre 5 verlaufen, verhindert wird. Lediglich über alternierend am innerhalb der Zeichenebene rechten und linken Rand des Mantelrohrs 6 angeordnete Durchgänge 16 kann das Wärmeübertragermedium 2 entlang der Strömungsrichtung 20 fließen, sodass sich eine wie in Figur 2 gezeigte beispielhafte Strömungslinie 21 des Wärmeübertragermediums 2 ergibt. Diese Strömungslinie 21 ist zumindest abschnittsweise quer bzw. senkrecht zur Strömungsrichtung 20 orientiert, sodass der Druckverlust des durch den Rohrbündelwärmeübertrager 4 strömenden Wärmeübertragermediums 2 mittels der Umlenkelemente 14 vorteilhaft verringert wird.

Alternativ oder zusätzlich können die Rohre 5 konvexe Formelemente aufweisen, sodass diese zumindest abschnittsweise quer zur Strömungsrichtung 20 verlaufen, und somit das Strömungsverhalten des die Rohre 5 umströmenden Wärmeüberträgermediums 2 dahingehend beeinflussen, dass dieses zumindest abschnittsweise quer bzw. senkrecht zur Strömungsrichtung 20 strömt.

Dadurch entstehen Verwirbelungen im Wärmeübertragermedium 2, die der Bildung von Ablagerungen entgegenwirken.

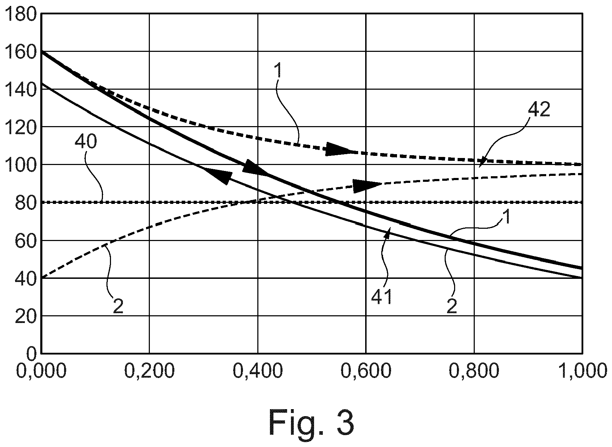

Figur 3 zeigt ein Diagramm mit dem Kurvenverläufen von Temperaturen im Wärmeübertrager 3 des warmen Mediums 1 sowie des Wärmeübertragermediums 2, sowohl bei Gleichstrom als auch bei Gegenstrom. Die beiden im Wesentlichen wie um eine (hier nicht ersichtliche) Asymptote gespiegelt dargestellten Graphen verdeutlichen die Wärmeaufnahme und Wärmeabgabe im Gleichstromprinzip 42 bei zunehmender Fläche, die zwischen Wärmeübertragungsmedium 2 und warmen Medium 1 vom warmen Medium 1 bedeckt ist.

Die beiden im Wesentlichen parallel dargestellten Graphen verdeutlichen die Wärmeaufnahme und Wärmeabgabe im Gegenstromprinzip 1 bei zunehmender Fläche, die zwischen Wärmeübertragungsmedium 2 und warmen Medium 1 vom warmen Medium 1 bedeckt ist.

Zum Zweck der Wärmeübertragung ist generell vorgesehen, dass der Wärmeübertrager 3 im Gegenstromprinzip 41 betrieben wird.

Die Kurve zum warmen Medium 1 im Gegenstromprinzip 41 verdeutlicht, dass dieses umso mehr Wärme verliert, je größer die umspülte Wärmeübertragungsfläche ist. Entsprechend nimmt die Temperatur des Wärmeübertragungsmediums 2 zu, wenn es die Flächenbereiche erreicht, die anfänglich vom warmen Medium 1 erwärmt wurden.

Im Gleichstromprinzip 42 nähern sich die Graphen des warmen Mediums 1 und des Wärmeübertragungsmediums 2 aneinander an, sodass mit zunehmender benetzter Fläche die Temperatur des warmen Mediums 1 sinkt und die Temperatur des Wärmeübertragungsmediums 2 steigt.

Die Wärmeübertragung erfolgt generell in Gegenstromprinzip 41 effizienter als in Gleichstromprinzip 42.

Es ist jedoch ersichtlich, dass mit zunehmender benetzter Fläche die Temperatur des warmen Mediums 1 gegebenenfalls unter Kristallisationstemperatur 40 gelangen kann, sodass dadurch Salze kristallisieren können.

In der Ausführungsform, in der das warme Medium 1 durch Rohre 5 strömt, besteht demzufolge die Gefahr, dass Ablagerungen an der Innenseite des Rohres 5 entstehen, die den Wärmetransport durch das Rohr 5 behindern bzw. verringern.

Durch Umschaltung auf Gleichstromprinzip 42 kann nun erreicht werden, dass die Temperatur auch des warmen Mediums 1 oberhalb der Kristallisationstemperatur 40 bleibt, sodass Ablagerungen verhindert bzw. verringert werden können.

Das ganze Verfahren kann so lange im Gleichstromprinzip 42 ausgeführt werden, bis eine ausreichende Entfernung von Ablagerungen an der Innenseite der Rohre 5 erfolgte. Danach kann wiederum in das Gegenstromprinzip 41 umgeschaltet werden.

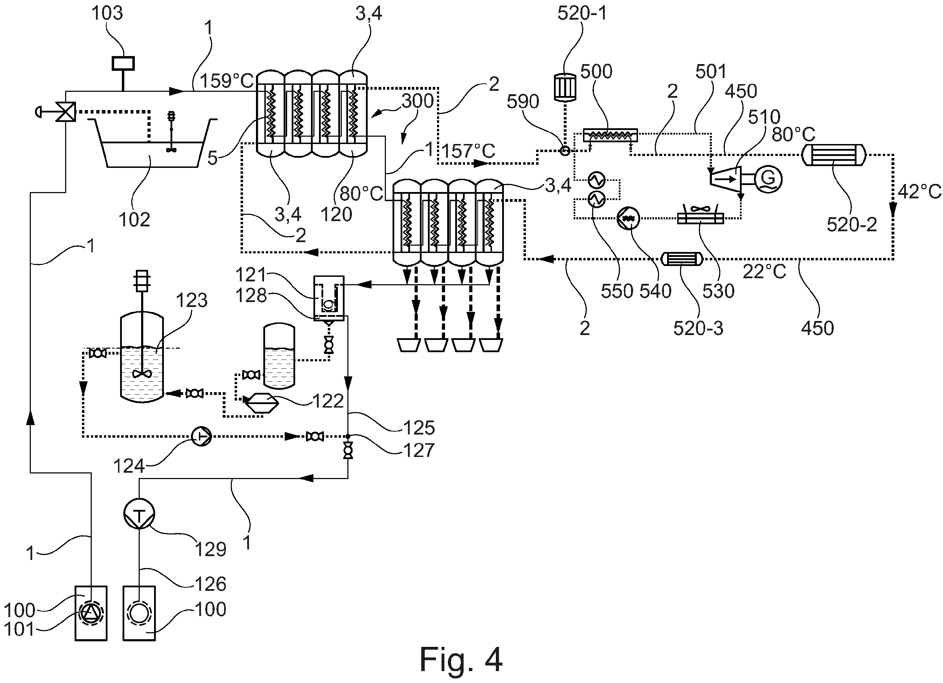

Eine Vorrichtung zur Durchführung des Verfahrens zur Gewinnung wenigstens eines anorganischen Wertstoffs umfasst in der von Figur 4 dargestellten Ausführungsform eine Fördereinrichtung 101 wie z.B. eine Förderpumpenanlage zur Förderung von zumindest teilweise flüssigem, warmem Medium 1 aus der Erde 100.

Von dort gelangt das warme Medium 1 in ein Thermalwasser-Becken 102 bzw. in ein Sicherheitsbecken zur Aufnahme von Teilströmen des warmen Mediums, um für den Fall einer Havarie ein Reservoir anzulegen bzw. zur Kontrolle der Thermalwasserqualität.

Nach dem Thermalwasser-Becken 102 passiert das warme Medium 1 eine Zumischung 103, in der dem warmen Medium 1 Hemmstoffen bzw. Inhibitoren zur Erhöhung der Löslichkeit störender Salze zugemischt werden kann.

Dann erreicht das warme Medium 1 einen Wärmeübertrager 3, der in der hier dargestellten Ausführungsform ein Rohrbündelwärmeübertrager 4 ist und ein System von Rohrbündeln aufweist.

Alternativ ist auch die Verwendung eines Plattenwärmeübertragers möglich. Die Rohre des Rohrbündelwärmeübertragers 4 sind vorzugsweise nicht glatt, sondern mit Strukturen, ausgebildet durch konvexe Formelemente, ausgestattet.

Im Falle von Plattenwärmeübertragern können glatte Platten mit Kreuzstromführung eingesetzt werden. Je nach thermischer Leistung besteht dieses System aus bis zu 50 einzelnen Platten. Das warme Medium 1 bzw. Thermalwasser wird nach Abkühlung einer Filtereinheit zugeführt.

Das bedeutet, das bei Verwendung eines Plattenwärmeübertragers das Medium Mäanderförmig über eine jeweilige Platte und somit in einer Ebene geführt wird. Dabei können die Platten möglichst glatt ausgeführt sein, also ohne Beulen oder Sicken.

Die Wärme des warmen Mediums 1 wird in dem Wärmeübertrager 3 an einen Wärmeträger in Form eines Wärmeübertragermediums 2 übertragen, welches beispielsweise sauberes, feststofffreies und konditioniertes Wasser mit pH-Wert-neutral im Betriebszustand sein kann.

Das Wärmeübertragermedium 2 wird dem Wärmeübertrager durch einen Wärmeübertragermedium-Eintritt 180 zugeführt und über einen Wärmeübertragermedium-Austritt 181 wieder abgeführt.

Das bedeutet, dass ein Volumenstrom des Wärmeübertragermediums 2 dem Wärmeübertrager 3 kalt zugeführt wird und vom Wärmeübertrager 3 warm abgeführt wird, wobei eine Temperaturspreizung von ca. 100°C entsprechend der Temperatur des warmen Mediums 1 im Wärmeübertrager 3 eingestellt wird. Beispielsweise ist die Eintrittstemperatur des Thermalwassers bzw. des warmen Mediums 1 in den Wärmeübertrager 3 160°C und die Austrittstemperatur des warmen Mediums 1 aus dem Wärmeübertrager 3 60°C. Die Temperaturen des Wärmeübertragermediums 2 sind möglichst nahe an die des warmen Mediums 1 heranzuführen, zwecks Verwertung der Wärme zu Heizzwecken und/oder zur Umwandlung in elektrische Energie. Der so entstehende "Pinch" ist vor allem eine ökonomische Größe: Je kleiner der Pinch, desto kleiner ist der exergetische Verlust und es kann mehr Wärme der Erzeugung elektrischer Energie zur Verfügung gestellt werden.

Das Wärmeübertragermedium 2 kann dabei einer Einrichtung zur Nutzung der Wärme des Wärmeübertragermediums 2 zur Verfügung gestellt werden, die auch als Zwischenkreis bezeichnet werden kann. Auf diesem Zwischenkreis wird weiter unten detaillierter eingegangen.

Dabei ist das vorliegende Verfahren zur Gewinnung wenigstens eines anorganischen Wertstoffs nicht darauf eingeschränkt, mit einer solchen weiteren Einrichtung verbunden zu werden, sondern die Wärme des Wärmeübertragermediums 2 kann auch unmittelbar einer Nutzung zugeführt werden, wie zum Beispiel zu Heizzwecken oder auch zwecks Umwandlung in elektrische Energie.

Der Wärmeübertrager 3 dient somit auch als Abkühlungseinrichtung zur Abkühlung des warmen Mediums 1 und Ausführung eines Fällungsprozesses zur Abscheidung anorganischer Wertstoffe. Die ausgefällten Stoffe werden nach der Wärmeübertragung in einer Abzugseinrichtung 120 abgezogen, die im unteren Bereich des senkrecht angeordneten Wärmeübertragers 3 angeordnet ist.

Daran anschließen kann sich ein Abreinigungsfilter 121, der als eine Feststofftrennvorrichtung wie z.B. ein Membranfilter, ein Mehrkammersedimenter, ein Tuchfilter, eine Zentrifuge eingerichtet sein kann, zwecks Herausfilterung von Feststoffen und/ oder aller Ausfällungen.

Gegebenenfalls können auch mehrere derartiger Abreinigungsfilter 121 von Teilströmen des bereits abgekühlten warmen Mediums 1 parallel durchströmt werden.

Der feststofffreie Strom 127 des bereinigten warmen Mediums 1 wird einer Vermischung 125 zugeführt. Der herausgefilterte Filterkuchen 128 wird je nach Art des Filters absatzweise oder kontinuierlich einem Ultraschall-Modul 122 zugeführt.

Das Ultraschall-Modul 122 ist als ein Ultraschallbehälter mit Ultraschallgebern ausgestattet. Mittels Ultraschalls werden die Feststoffpartikel soweit zerkleinert, dass sie leicht dispergierbar und besser pumpfähig sind, und danach einem Suspensionsbehälter 123 zugeführt. Die mittlere Partikelgröße wird von ca. 100 µm auf ca. 5 µm verringert, womit auch erreicht wird, dass die Partikel vom Erdreich leichter aufgenommen werden können bzw. die Gefahr des Verstopfens des Austrittes von Injektionsleitungen verringert wird.

Im Suspensionsbehälter 123 erfolgt eine Homogenisierung der Dispersion vor Vermischung 125 mit dem feststofffreien Strom 127 im gezeigten Mischpunkt.

Eine Membranpumpe 124 fördert die Suspension zu einer Rückführung 126, wo mittels einer Reinjektionspumpe 129 das abgekühlte Thermalwasser und die nicht abgetrennten Feststoffe wieder der Erde 100 zugeführt werden.

Die Membranpumpe 124 dient gleichzeitig zur Regulierung des Parallelstroms der Zerkleinerungsstrecke.

Es ist aus Figur 4 ersichtlich, dass hier verfahrenstechnisch Thermalwasser abgekühlt wird und zugleich werden im Kühlprozess ausgefällte Stoffe abgefiltert und zur Reinjektion aufbereitet werden. Das Thermalwasser bzw. das warme Medium 1 ist kein reines Wasser, sondern eine gesättigte bzw. übersättigte Lösung diverser Salze, Oxide und Hydroxide, in der Regel Sulfate, Karbonate, Kieselsäuren und/ oder Chloride. Die Löslichkeit hängt in der Regel von der Temperatur ab und zwar derart, dass mit erhöhter Temperatur die Löslichkeit zunimmt. Das bedeutet, dass beim Abkühlen des Thermalwassers ein Übersättigungseffekt eintritt, der zur Folge hat, dass zuvor gelöst vorliegende Stoffe ausgefällt werden.

Die Ausfällung tritt im Volumen des warmen Mediums und an den Wänden der Rohre 5 des Wärmeübertragers 3 ein. Da die Rohrwandtemperaturen niedriger sind als die des Hauptstromes des warmen Mediums ist hier mit verstärkter Übersättigung und somit stärkeren Ausfällungseffekten zu rechnen. Die Folgen sind Schichtenbildung an der Rohrwand, die zur Hemmung der Wärmeübertragung führen.

Um diesen nachteiligen Effekt zu verringern oder zu verhindern kann die Strömung des warmen Mediums so beeinflusst werden, dass die Schichtenbildung durch Erhöhung der Turbulenz der Strömung, die durch Beulstrukturierung in Form von konvexen Formelementen in den Rohrwänden herbeigeführt wird, möglichst vollständig unterdrückt wird.

Hierbei spielt die Optimierung der geometrischen Ausprägung der konvexen Formelemente eine entscheidende Rolle.

Ein jeweiliges konvexes Formelement kann in seiner senkrecht zur Ebene der Oberfläche, an oder in der das konvexe Formelement angeordnet ist, und durch seinen höchsten Punkt verlaufenden Schnittebene eine Querschnittsfläche aufweisen, die durch eine im Wesentlichen bogenförmige Kante sowie eine an die bogenförmige Kante angeschlossene Kante begrenzt ist, die im Wesentlichen als Tangente ausgeführt ist, wobei die als Tangente ausgeführte Kante in die Oberfläche übergeht. Das bedeutet, dass das konvexe Formelement in einem senkrecht zur Ebene der Oberfläche, an oder in der das konvexe Formelement angeordnet ist, verlaufenden Schnitt im Wesentlichen die Form eines längs-halbierten Tropfens aufweist.

Insbesondere kann das jeweilige konvexe Formelement dabei an seiner flachen Seite zuerst von dem betreffenden Medium angeströmt werden.

In wenigstens einem Behälter und/ oder, Apparat zur Aufnahme warmen Mediums und/ oder in wenigstens einer Leitung zur Aufnahme warmen Mediums kann ein Reinigungsverfahren zur Verhinderung oder Verminderung von Ablagerungen durchgeführt werden, bei dem Druckgas-Impulse mit hoher Geschwindigkeit in den Behälter bzw. in die Leitung eingebracht werden. Das komprimierte Gas expandiert im Inneren des Behälters bzw. der Leitung und entwickelt gezielt Kräfte zum Austrag der Ablagerungen. Mittels einer Flüssigkeit, wie zum Beispiel mit Wasser, können die abgetragenen Ablagerungen ausgespült werden.

Der Behälter kann ein Rohr, eine Armatur und oder ein Apparat zur Aufnahme warmen Mediums sein.

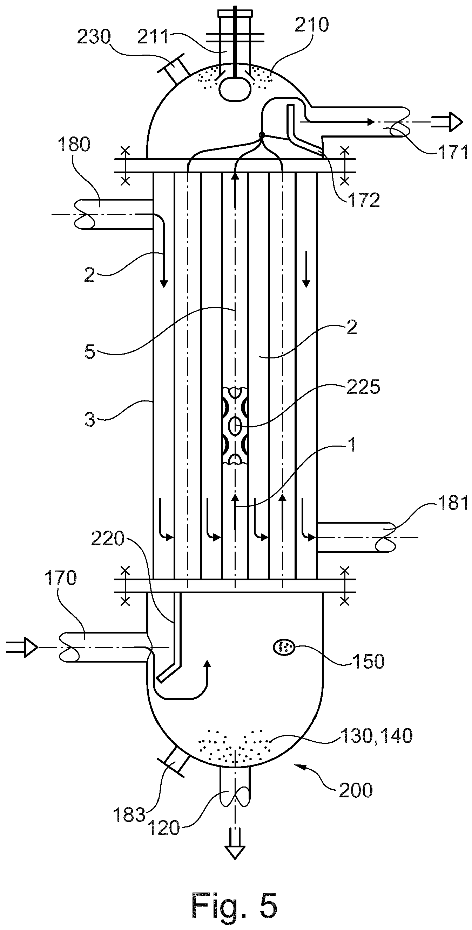

Figur 5 zeigt, dass der Wärmeübertrager 3 senkrecht ausgerichtet ist, wobei ein Medium-Eintritt 170 an der Unterseite des Wärmeübertragers 3 realisiert ist. Im unteren Bereich des Wärmeübertragers 3, der auch als Absetzungsbereich 200 bezeichnet werden kann, befindet sich die Abzugseinrichtung 120, in der sich anorganische Wertstoffe 130, weitere Wertstoffe 140 und/ oder Feststoff 150 bzw. ausgefälltes Salz sammeln können. Über eine Öffnung 183 in diesem Bereich können Stillstands-Reinigungen vorgenommen werden. Hinter dieser Öffnung 183 befindet sich ein Prallblech 220, dass für eine gleichmäßige Anströmung der Rohre 5 des Wärmeübertragers 3 dient und zugleich aufgrund von auf das einströmende Medium bewirkten Zentrifugalkräften für die Abscheidung der ausgefällten Salze sorgt.

Die Salzfrachten sind damit quasi thermisch sortiert da die Löslichkeit der einzelnen Stoffe temperaturspezifisch ist.

Insbesondere bei Nutzung einer Mehrfach-Anordnung derartiger Wärmeübertrager 3 und Abzugseinrichtungen 120 in Wärmeübertragungsketten ist damit zu rechnen, dass sich bestimmte Stoffe in den einzelnen Abzugseinrichtungen 120 absetzen.

Die Rohre 5 des Wärmeübertragers 3 sind mit konvexen Formelementen 225 ausgestattet, die zur Rohr-Innenseite ragen. Die konvexen Formelemente 225 bewirken zum einen die Erhöhung der wärmestromdichten und zum anderen verhindern sie die Wahrscheinlichkeit des Anwachsens von Feststoffen aufgrund der Erzeugung erhöhter Turbulenz.

Um die Rohre 5 herum wird das Kühlmedium bzw. das Wärmeübertragermedium 2 geführt. Das bedeutet, dass durch die spezielle Formgebung der Rohre diese lokale Beschleunigungen des Thermalwassers entlang der Rohrwände bewirken. Damit wird die Kontaktzeit der Ionen mit der Rohrwand reduziert. Zudem sorgt eine dadurch bewirkte Quervermischung dafür, dass die Kontaktzeit der Ionen mit der Rohrwand gegenüber unstrukturierten Rohren abnimmt. Damit verschiebt sich die Keimbildung hin zu Anlagenteilen, an denen gezielt eine Salzausfällung vorgenommen werden kann.

Dies wird begünstigt, dass an einer geeigneten Stelle im Prozess Salzkristalle zugegeben werden. Das Kristallwachstum und die Bildung von größeren Salzkristallen erfolgen dann nahezu instantan.

Das warme Medium 1 in den Rohren 5 und das Wärmeübertragermedium 2 können im Gegenstrom-Prinzip den Wärmeübertrager 3 durchströmen.

An der Oberseite des Wärmeübertragers 3 erfolgt eine Gasabscheidung 210 des Gases 160. Ebenfalls wird hier das warme Medium 1 aus dem Wärmeübertrager 3 durch einen Medium-Austritt 171 abgeführt.

Kurz vor Ausführung aus den Medium-Austritt 171 passiert das warme Medium 1 ein Umlenkblech 172, welches durch eine Umlenkung des Medium-Stroms nach oben die Mitnahme von Gasblasen weitestgehend verhindert.

Im obersten Punkt des Wärmeübertragers 3 erfolgt der Abzug des Gases 160 durch einen Gasaustritt 211. Von hier kann das Gas 160 einer Gassammelleitung zugeführt werden.

Neben dem Gasaustritt 211 ist eine Reinigungsöffnung 230 vorgesehen, die einen dem unteren Bereich des Wärmeübertragers 3 zugeführten Reinigungsstrom aufnimmt und nach außen beispielsweise in eine Einrichtung zur Aufbereitung ableitet.

Figur 4 zeigt zudem eine Mehrfach-Anordnung von Wärmeübertragern 3, die strömungstechnisch in Reihenschaltung 300 angeordnet sind.

Hier ist ersichtlich, dass zur Nutzung der Energie von Thermalwasser geothermische Anlagen genutzt werden, die eine Gruppe von Rohrbündelwärmeübertragern 4 aufweisen, in denen das Thermalwasser bzw. das warme Medium beispielsweise von 160 °C auf 60 °C oder auch bis auf 20 °C durch ein verdampfendes Wärmeübertragermedium abgekühlt wird, um die beschriebenen Ausfällungsprozesse zu realisieren. Das Wärmeübertragermedium wird danach ausgesucht, dass es die genannte Wärmespreizung ertragen kann, wie z.B. ein organisches Medium, z.B. Isopentan, das bei einem technisch günstigen Druck vom unterkühlten Zustand auf den Zustand des gesättigten Dampfes gebracht werden kann.

Das Thermalwasser bzw. das warme Medium kann dabei durch die Rohre der Rohrbündelwärmeübertrager 4 geführt werden, so dass diese leichter zu reinigen sind.

Die Temperaturen des Wärmeübertragermediums müssen dabei stets geringer sein als die des Thermalwassers bzw. des warmen Mediums. Der so aus dem Wärmeübertragermedium erzeugte Dampfstrom kann einem Turbinen-Generatorsystem zugeführt und die Wärmeenergie in elektrischen Strom umgewandelt werden. Überschüssige Wärme kann zu Heizzwecken eingesetzt werden.

Einem jeweiligen Rohrbündelwärmeübertrager 4 kann ein Abreinigungsfilter 121 zugeordnet sein.

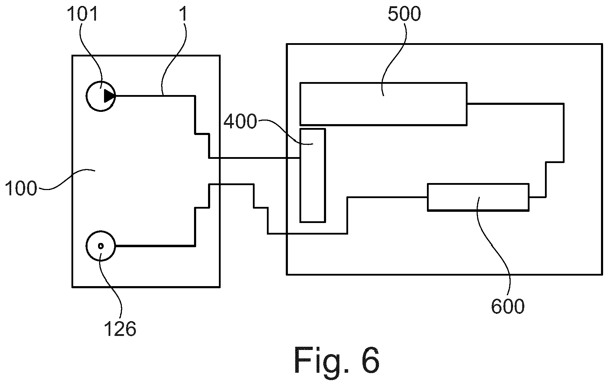

Figur 6 zeigt beispielhaft eine konventionelle Nutzung der Wärmeenergie von Thermalwasser, hier am Beispiel des im deutschen Rheingraben geförderten Thermalwassers.

Mittels einer Fördereinrichtung 101 wird als warmes Medium 1 Thermalwasser aus der Erde 100 gefördert und einem Verdampfer 400 zugeführt. Der hier erzeugte Dampf wird einer Stromerzeugungseinrichtung 410 zugeführt, und verbleibende Restwärme aus der Stromerzeugungseinrichtung 410 wird einer Wärmenutzung 420 zugeführt. Von dort gelangt das Thermalwasser über eine Rückführung 126 wieder zurück in die Erde 100.

Es ist ersichtlich, dass demzufolge das Thermalwasser als warmes Medium 1 den gesamten Kreislauf durchströmt, sodass die Verschmutzungsgefahr bzw. ein ungewünschtes Absetzen von Partikeln, insbesondere von radioaktiven Partikeln, in der gesamten dargestellten Anlage auftreten kann.

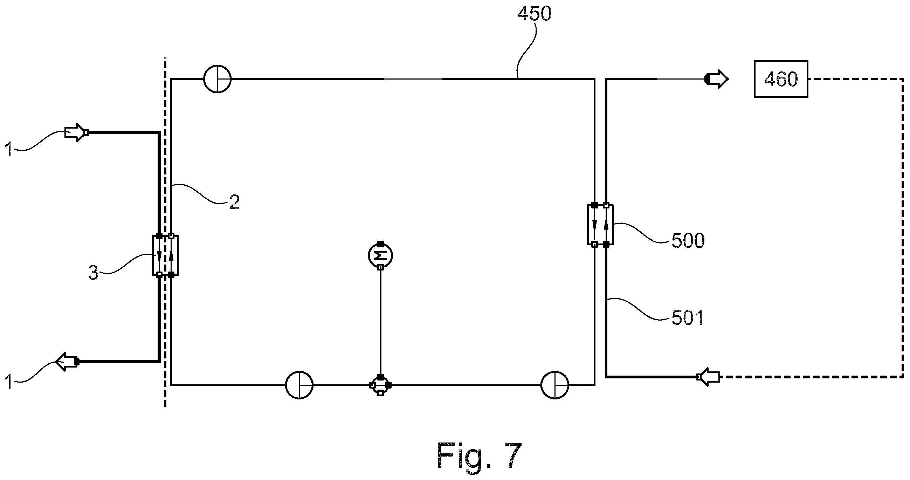

Figur 7 zeigt den Zwischenkreis 450 zwischen dem Wärmeübertrager 3 und dem Wärmetauscher 500 in vereinfachter Darstellung.

Hier ist ersichtlich, dass warmes Medium 1 dem Wärmeübertrager 3 zugeführt wird. Im Wärmeübertrager 3 wird Wärme vom warmen Medium 1 auf ein Wärmeübertragungsmedium 2 übertragen. Das Wärmeübertragungsmedium 2 wird einen Wärmetauscher 500 zugeführt, in dem Wärme aus dem Wärmeübertragungsmedium 2 wiederum auf ein Wärmetauschermedium 501 übertragen wird. Wärme des Wärmetauschermediums 501 wird einer Einrichtung zur Nutzung der Wärme 460 zugeführt.

Der Vorteil dieses Verfahrens liegt insbesondere darin, dass radioaktive Bestandteile des warmen Mediums 1 nicht bis in Anlagen führt werden, in denen die Nutzung der Wärme des warmen Mediums 1 erfolgt, sondern dass das warme Medium 1 einen eigenen Kreislauf nicht verlässt und demzufolge innerhalb kürzester Zeit wieder in die Erde re-injiziert werden kann. Entsprechend fallen keine radioaktiven Abfälle an der Erdoberfläche an.

Ein weiterer Vorteil dieser Vorgehensweise ist, dass der dem sogenannten Bergrecht unterworfene Bereich, in dem das warme Medium 1 bzw. das Thermalwasser bewegt wird, verfahrenstechnisch sehr klar getrennt ist vom Bereich der Nutzung der Wärme des Thermalwassers.

Figur 4 zeigt eine Gesamt-Übersicht eines Systems, dessen Bestandteil auch der Zwischenkreis 450 ist.

Der Zwischenkreis 450 ist in seinem grundsätzlichen Aufbau bereits in Bezug auf Figur7 erläutert worden.

Auch in Figur 4 ist ersichtlich, dass zunächst warmes Medium 1 einem Wärmeübertrager 3 zugeleitet wird, wobei hier mehrere Wärmeübertrager 3 dargestellt sind. In den Wärmeübertragern 3 wird Wärme vom warmen Medium 1 auf ein Wärmeübertragermedium 2 übertragen.

Das Wärmeübertragermedium 2 wird einem Wärmetauscher 500 zugeführt, in dem Wärme vom Wärmeübertragermedium 2 auf ein Wärmetauschermedium 501 übertragen wird.

Ein Hochtemperatur-Wärmetauscher 520-1 kann ebenfalls vom Wärmeübertragermedium 2 durchströmt werden und Hochtemperatur-Prozesswärme an Kunden liefern bzw. kann einen Teilwärmestrom vor Eintritt in den einem Wärmetauscher 500 abtrennen und in ein nachgeschaltetes Wärmenetz transportieren. Dadurch stellt sich im Wärmenetz eine erhöhte Mischungstemperatur ein, welche ggf. erforderlich ist um die Mindesttemperatur im Netz zu halten.

Der Wärmetauscher 500 nimmt den Strom des heißen Wärmeübertragermediums 2 auf und kühlt ihn soweit ab, wie es die thermische Anforderung der nachgeschalteten Einrichtung zur Nutzung der Wärme 460 erforderlich macht. Als Wärmetauschermedium 501 dient das Arbeitsmediums eines ORC-Prozesses, das hier vom unterkühlten Zustand in den Sattdampfzustand überführt wird. Gegebenenfalls kann der gesamte Prozess derart eingestellt sein, dass die Zurverfügungstellung von Wärme aus dem Wärmeübertragermedium 2 an den Hochtemperatur-Wärmetauscher 520-1 Vorrang hat vor der Versorgung des Wärmetauschers 500, da mittels dem Hochtemperatur-Wärmetauscher 520-1 Wohnungsheizungen, Warmwasserversorgungen und/ oder Produktionsprozesse versorgt werden.

Das Wärmeübertragermedium 2 wird zudem einem Wärmetauscher in Form einer Heizeinrichtung 520-2 zur Zurverfügungstellung von Wärme, wie zum Beispiel von Fernwärme, zugeführt. Eine solche Heizeinrichtung 520-2 kann ein Fernwärmeübertrager sein, welcher den Rücklauf aus dem Fernwärmenetz aufnimmt und die Temperatur auf die Vorlauftemperatur anhebt. Dieser Wärmetauscher bzw. Heizeinrichtung 520-2 liefert die Hauptversorgung des Wärmenetzes und sollte zumindest in den Nebenzeiten die Versorgung mit Wärme sicherstellen können. Übliche Temperaturspreizungen sind 50°C auf 100°C. Diese Spreizung ist geringer als die des Wärmeübertragermediums 2 des Zwischenkreises 450, dessen Temperatur hier auf einen Wert von etwa 50°C absinkt.

Aus dem Wärmetauscher in Form einer Heizeinrichtung 520-2 gelangt das Wärmeübertragermedium 2 in einen Rest-Wärmetauscher 520-3, welcher verbliebene Wärme dem Zwischenkreis entzieht. Dabei kann das Temperaturniveau gegebenenfalls zu niedrig sein, um ins Wärmenetzt gespeist zu werden. Entsprechend können gegebenenfalls hier Trocknungsprozesse oder Fischfarmen mit Wärme versorgt werden. Optional kann hier mittels Wärmepumpe aber auch noch zusätzliche Spitzenlast-Wärme produziert werden.

Das erwärmte Wärmetauschermedium 501 wird einer Umwandlungseinrichtung 510 zur Umwandlung von Wärme in elektrische Energie zugeführt, in der Wärme des Wärmetauschermedium 501 mittels einer von der Umwandlungseinrichtung 510 umfassten Dampfturbine mit angeschlossenem Generator in elektrische Energie umwandelbar ist. Die Dampfturbine und der Generator denen entsprechend zur Auskopplung von elektrischer Energie. Der organische Wärmeträger wird hier entspannt, wobei zugleich die Temperatur auf etwa 40°C sinkt.

Nach der Umwandlungseinrichtung 510 gelangt das bereits abgekühlte Wärmetauschermedium 501 zu einem Kondensator 530. Der Kondensator verflüssigt den entspannten Dampf aus der Turbine.

Daran anschließend gelangt das Wärmetauschermedium 501 in eine Zirkulationspumpe 540. Die Zirkulationspumpe dient zur Druckerhöhung des kalten Arbeitsmediums.

Von der Zirkulationspumpe 540 gelangt das Wärmetauschermedium 501 in eine Kompensatorstrecke 550. Die Kompensatorstrecke 550 dient zur Ausgleichung von Wärmedehnungen bei Teillastfällen. Von dort wird das Wärmetauschermedium 501 wiederum dem Wärmetauscher 500 zugeführt.

Die Heizeinrichtung 520-2 sowie auch die Umwandlungseinrichtung 510 entsprechen damit der Einrichtung zur Nutzung der Wärme 460, die in Figur 7 dargestellt ist.

Zwischen dem Wärmeübertrager 3 und dem Wärmetauscher 500 erfolgt eine technologische sowie auch rechtliche Trennung der Verarbeitung des warmen Mediums 1. Der Wärmeübertrager 3 befindet sich noch in einem Teilbereich, in dem das sogenannte Bergrecht seine Anwendung findet. Der Wärmetauscher 500 befindet sich in einem Bereich, in dem bereits gewerbliches Recht seine Anwendung findet.

### Bezugszeichenliste

- 1: Warmes Medium
- 2: Wärmeübertragermedium
- 3: Wärmeübertrager
- 4: Rohrbündelwärmeübertrager
- 5: Rohre
- 6: Mantelrohr
- 7: Innenraum Mantelrohr
- 8: Anschluss warmes Medium
- 9: Anschluss Wärmeübertragermedium
- 10: Vorrichtung zur Gewinnung von Erdwärme
- 11: Verteiler
- 12: Steuerungseinrichtung
- 13: Pumpeinrichtung
- 14: Umlenkelement
- 15: Aussparung
- 16: Durchgang
- 20: Strömungsrichtung
- 21: Strömungslinie
- 40: Kristallisationstemperatur
- 41: Gegenstromprinzip
- 42: Gleichstromprinzip
- 100: Erde
- 101: Fördereinrichtung
- 102: Thermalwasser-Becken
- 103: Zumischung
- 110: Abkühlungseinrichtung
- 120: Abzugseinrichtung
- 121: Abreinigungsfilter
- 122: Ultraschall-Modul
- 123: Suspensionsbehälter
- 124: Membranpumpe
- 125: Vermischung
- 126: Rückführung
- 127: feststofffreier Strom
- 128: Filterkuchen
- 129: Reinjektionspumpe
- 130: anorganischer Wertstoff
- 140: weiterer Wertstoff
- 150: Feststoff
- 160: Gas
- 170: Medium-Eintritt
- 171: Medium-Austritt
- 172: Umlenkblech
- 180: Wärmeübertragermedium-Eintritt
- 181: Wärmeübertragermedium-Austritt
- 183: Öffnung
- 200: Absetzungsbereich
- 210: Gasabscheidung
- 211: Gasaustritt
- 220: Prallblech
- 225: konvexes Formelement
- 230: Reinigungsöffnung
- 300: Reihenschaltung
- 400: Verdampfer
- 410: Stromerzeugungseinrichtung
- 420: Wärmenutzung
- 450: Zwischenkreis
- 460: Einrichtung zur Nutzung der Wärme
- 500: Wärmetauscher
- 501: Wärmetauschermedium
- 510: Umwandlungseinrichtung
- 520-1: Hochtemperatur-Wärmetauscher
- 520-2: Heizeinrichtung
- 530: Kondensator
- 540: Zirkulationspumpe
- 550: Kompensatorstrecke

## Patentansprüche

1. Verfahren zur Gewinnung von Erdwärme, bei dem ein zumindest teilweise flüssiges, warmes Medium (1) aus der Erde gefördert wird, in einen Wärmeübertrager (3) geleitet wird, und in dem Wärmeübertrager (3) thermische Energie aus dem warmen Medium (1) auf ein Wärmeübertragermedium (2) übertragen wird, und das erwärmte Wärmeübertragermedium (2) zur Verfügung gestellt wird, wobei der Wärmeübertrager (3) dazu eingerichtet ist, entlang zumindest einer Strömungsrichtung (20) von dem warmen Medium (1) sowie von dem Wärmeübertragermedium (2) durchflossen zu werden, und wobei bei der Durchströmung des Wärmeübertragers (3) zwischen einer Durchströmung in Gleichstrom und einer Durchströmung in Gegenstrom von warmem Medium (1) und Wärmeübertragermedium (2) gewechselt wird.

2. Verfahren zur Gewinnung von Erdwärme nach Anspruch 1, wobei das warme Medium (1) und das Wärmeübertragermedium (2) den Wärmeübertrager (3) bei Gleichstrom entlang derselben Strömungsrichtung (20) und bei Gegenstrom entlang entgegengesetzter Strömungsrichtungen durchfließen.

3. Verfahren zur Gewinnung von Erdwärme nach Anspruch 1 oder 2, wobei lediglich die Strömungsrichtung (20) des Wärmeübertragermediums (2) gewechselt wird.

4. Verfahren zur Gewinnung von Erdwärme nach einem der vorhergehenden Ansprüche, wobei die Strömungsrichtung (20) bei Absenkung der Temperatur des Wärmeübertragermediums (2) auf 10 K unter das Temperaturniveau des warmen Mediums an derselben Position von Gegenstrom zu Gleichstrom umgekehrt wird.

5. Verfahren zur Gewinnung von Erdwärme nach einem der vorhergehenden Ansprüche, wobei die Strömungsrichtung (20) bei Erhöhung der Temperatur des Wärmeübertragermediums (2) auf eine Temperatur, die sich innerhalb einer Temperaturdifferenz von 10 K in Bezug auf das Temperaturniveau des warmen Mediums an derselben Position befindet, von Gleichstrom zu Gegenstrom umgekehrt wird.

6. Verfahren zur Gewinnung von Erdwärme nach einem der vorhergehenden Ansprüche, wobei die Strömungsrichtung (20) bei Absenkung der Temperatur des warmen Mediums (1) unter eine Kristallisationstemperatur (40) des warmen Mediums (1), insbesondere auf 140 °C oder weniger, von Gegenstrom zu Gleichstrom umgekehrt wird.

7. Verfahren zur Gewinnung von Erdwärme nah einem der vorhergehenden Ansprüche, wobei die Strömungsrichtung (20) bei Erhöhung der Temperatur des warmen Mediums (1) über eine Kristallisationstemperatur (40) des warmen Mediums (1), insbesondere auf 160 °C und mehr, von Gleichstrom zu Gegenstrom umgekehrt wird.

8. Verfahren zur Erzeugung elektrischer Energie, bei dem das Verfahren gemäß einem der Ansprüche 1 bis 5 realisiert wird und das erwärmte Wärmeübertragermedium (2) einer Umwandlungseinrichtung zur Umwandlung thermischer Energie in elektrische Energie zugeführt wird und diese Umwandlungseinrichtung thermische Energie zumindest teilweise in elektrische Energie umwandelt.

9. Vorrichtung zur Gewinnung von Erdwärme, umfassend einen Wärmeübertrager (3), mit dem thermische Energie aus einem warmen Medium (1) auf ein Wärmeübertragermedium (2) übertragbar ist und der dazu eingerichtet ist, entlang zumindest einer Strömungsrichtung (20) von dem warmen Medium (1) und Wärmeübertragermedium (2) durchflossen zu werden, sowie umfassend eine Steuerungseinrichtung (12), mit der eine Durchströmung des Wärmeübertragers (3) zwischen einer Durchströmung in Gleichstrom und einer Durchströmung in Gegenstrom von warmem Medium (1) und Wärmeübertragermedium (2) gewechselt werden kann.

10. Vorrichtung (10) zur Gewinnung von Erdwärme nach Anspruch 9, umfassend zumindest eine Pumpeinrichtung (13) zur Förderung des Wärmeübertragermediums (2), wobei die Pumpeinrichtung (13) derart mit der Steuerungseinrichtung (12) steuerbar ist, dass die Pumpeinrichtung (13) die Strömungsrichtung (20) des Wärmeübertragermediums (2) umkehrt.

11. Vorrichtung (10) zur Gewinnung von Erdwärme nach einem der Ansprüche 9 und 10, wobei der Wärmeübertrager (3) ein Rohrbündelwärmeübertrager (4) ist.

12. Vorrichtung (10) zur Gewinnung von Erdwärme nach Anspruch 11, wobei zumindest eines der Rohre (5) des Rohrbündelwärmeübertragers (4) mehrere zum Innenraum des betreffenden Rohres hin ausgerichtete konvexe Formelemente aufweist.

13. Vorrichtung (10) zur Gewinnung von Erdwärme nach Anspruch 12, wobei das konvexe Formelement in seiner senkrecht zur Ebene der Oberfläche, an oder in der das konvexe Formelement angeordnet ist, und durch seinen höchsten Punkt verlaufenden Schnittebene eine Querschnittsfläche aufweist, die durch eine im Wesentlichen bogenförmige Kante sowie eine an die bogenförmige Kante angeschlossene Kante begrenzt ist, die im Wesentlichen als Tangente ausgeführt ist, wobei die als Tangente ausgeführte Kante in die Oberfläche übergeht.

14. Vorrichtung (10) zur Gewinnung von Erdwärme gemäß einem der Ansprüche 9 bis 13, wobei die Steuerungseinrichtung dazu eingerichtet ist, die Strömungsrichtung (20) bei Absenkung der Temperatur des warmen Mediums (1) auf 140 °C oder weniger von Gegenstrom zu Gleichstrom umzukehren.

15. Vorrichtung (10) zur Gewinnung von Erdwärme gemäß einem der Ansprüche 9 bis 14, wobei die Steuerungseinrichtung dazu eingerichtet ist, die Strömungsrichtung (20) bei Erhöhung der Temperatur des warmen Mediums (1) auf 160 °C und mehr von Gleichstrom zu Gegenstrom umzukehren.
